# EUROPEAN PATENT APPLICATION

(11) **EP 4 600 055 A1**
(43) Date of publication of application: **13.08.2025**
(21) Application number: 23870326.8
(22) Date of filing: 13.09.2023
(51) Int. Cl.: B60H 1/00, F25B 41/20

(54) **THERMAL MANAGEMENT SYSTEM FOR VEHICLE, AND VEHICLE**

(30) Priority: 29.09.2022 CN 202211204370
(71) Applicant: BYD Company Limited, Shenzhen, Guangdong 518118 (CN)
(72) Inventor: LI, Yuzhong, Shenzhen, Guangdong 518118 (CN); YE, Meijiao, Shenzhen, Guangdong 518118 (CN); XU, Min, Shenzhen, Guangdong 518118 (CN); JIANG, Zhiwang, Shenzhen, Guangdong 518118 (CN); ZHANG, Jianjun, Shenzhen, Guangdong 518118 (CN)
(74) Representative: Wu, Ting
(86) International application number: PCT/CN2023/118487
(87) International publication number: WO 2024/067089

(57) **Abstract**

A thermal management system (100) for a vehicle (200), and the vehicle (200). The thermal management system (100) comprises a compressor (1), an external heat exchanger (2), a first heat exchange plate (3), a second heat exchange plate (4), and an integrated module (5). The integrated module (5) comprises a valve seat (51) and a throttle valve group (52). The external heat exchanger (2), an inlet (1b), two ends of a first flow channel (30) and two ends of a second flow channel (40) are connected to corresponding connectors (510), respectively. The thermal management system (100) has a battery cooling mode, and in the battery cooling mode, a throttled and depressurized refrigerant flowing out of the integrated module (5) respectively flows to at least one of the first flow channel (30) and the second flow channel (40), and then flows back to the integrated module (5) to be discharged to the inlet (1b).

## Description

### CROSS-REFERENCE TO RELATED APPLICATIONS

The present disclosure claims priority to Chinese Patent Application No. 202211204370.8 filed on September 29, 2022, which is incorporated herein by reference in its entirety.

### FIELD

The present disclosure relates to the field of vehicle technologies, and in particular, to a vehicle thermal management system and a vehicle.

### BACKGROUND

With the rapid development of new energy vehicles, the number of users of new energy vehicles continues to increase. The number of charging stations and charging speed cannot meet the needs of customers, causing inconvenience to users. High-power fast charging can greatly reduce the charging time of vehicles and improve travel efficiency, thus becoming the trend of future development; however, the heat generated during the fast charging process of vehicles cannot be dissipated which will affect the charging efficiency, and affect travel efficiency, but also make the use of the vehicle inconvenient.

### SUMMARY

The present disclosure is intended to solve at least one of the technical problems existing in the prior art. To this end, the present disclosure provides a thermal management system for vehicles. The thermal management system dissipates the heat generated by the battery modules in a timely manner, ensuring the cyclic service life of the battery modules. Meanwhile, the thermal management system has a certain degree of integration, which is convenient for saving the interior layout space.

The present disclosure also provides a vehicle arranged with the above thermal management system.

According to the thermal management system for the vehicle in the example of the first aspect of the present disclosure, the vehicle includes a battery module, and the thermal management system includes: a compressor, the compressor is arranged with an outlet and an inlet; an external heat exchanger, the external heat exchanger is connected to the outlet; a first heat exchange plate and a second heat exchange plate, the first heat exchange plate and the second heat exchange plate are respectively configurable for heat exchange with the battery module, a first flow channel is arranged inside the first heat exchange plate, and a second flow channel is arranged inside the second heat exchange plate; an integrated module, the integrated module includes a valve seat and a throttle valve group, the throttle valve group is arranged on the valve seat to throttle and reduce the pressure of the refrigerant flowing through it, the valve seat being arranged with a plurality of interfaces, and the external heat exchanger, the inlet, the two ends of the first flow channel and the two ends of the second flow channel are respectively connected to the corresponding interfaces. The thermal management system has a battery cooling mode. In the battery cooling mode, a throttled and depressurized refrigerant flowing out of the integrated module respectively flows to at least one of the first flow channel and the second flow channel, and then flows back to the integrated module to be discharged to the inlet.

The thermal management system of the vehicle according to the present disclosure, through the arrangement of a compressor, an external heat exchanger, a first heat exchange plate, a second heat exchange plate and a throttle valve group, the thermal management system gains a battery cooling mode. In this mode, at least one of the first heat exchange plate and the second heat exchange plate is used to cool and reduce the temperature of the battery module, ensuring that the heat generated during the charging (such as fast charging) and discharging of the battery module can be dissipated in a timely manner. This helps to ensure that the battery module at an appropriate operating temperature, thus ensuring the reliable use of the battery module and its good cycle life. In addition, by arranging the throttle valve group on the valve seat, it is convenient to make the integrated module have a certain degree of integration, which is beneficial for saving the interior layout space and facilitating the platform-based layout.

In some examples, the plurality of interfaces includes an exhaust interface. The outlet is connected to the exhaust interface. The integrated module is further arranged with a control valve group arranged on the valve seat, and the control valve group operates to switch the flow direction of the refrigerant in the valve seat. The thermal management system further includes a first heat exchanger; the first heat exchanger is connected between the throttle valve group and the inlet. The thermal management system has a battery heating mode. In the battery heating mode, the refrigerant flowing out of the outlet flows through the integrated module and then flows to at least one of the first flow channel and the second flow channel and then flows to the first heat exchanger after being throttled by the throttle valve group.

In some examples, the plurality of interfaces includes a heat exchanger interface. The first heat exchanger is fixed to the valve seat and is connected to the heat exchanger interface.

In some examples, the plurality of interfaces include an exhaust interface, a return air interface, a first cold plate interface to a fourth cold plate interface. The exhaust interface is connected to the outlet; the return air interface is connected to the inlet. The first cold plate interface and the second cold plate interface are respectively connected to the two ends of the first flow channel, and the third cold plate interface and the fourth cold plate interface are respectively connected to the two ends of the second flow channel. A first main circuit, a second main circuit, a first branch circuit and a second branch circuit are arranged inside the valve seat. The first main circuit is connected to the exhaust interface, the second main circuit is connected to the return air interface, the first branch circuit is connected to the first cold plate interface, and the second branch circuit is connected to the third cold plate interface. The first main circuit is respectively connected to the first branch circuit and the second branch circuit, and the second main circuit is respectively connected to the first branch circuit and the second branch circuit. The control valve group includes a first electronic expansion valve and a second electronic expansion valve. Both the first electronic expansion valve and the second electronic expansion valve have on-off and flow regulating functions. The first electronic expansion valve is connected in series to the first main circuit, and the second electronic expansion valve is connected in series to the second main circuit.

In some examples, the plurality of interfaces include an exhaust interface, a return air interface, a first cold plate interface to a fourth cold plate interface. The exhaust interface is connected to the outlet; the return air interface is connected to the inlet. The first cold plate interface and the second cold plate interface are respectively connected to the two ends of the first flow channel, and the third cold plate interface and the fourth cold plate interface are respectively connected to the two ends of the second flow channel. A first main circuit, a second main circuit, a first branch circuit and a second branch circuit are arranged inside the valve seat. The first main circuit is connected to the exhaust interface, the second main circuit is connected to the return air interface, the first branch circuit is connected to the first cold plate interface, and the second branch circuit is connected to the third cold plate interface. The first main circuit is respectively connected to the first branch circuit and the second branch circuit, and the second main circuit is respectively connected to the first branch circuit and the second branch circuit. The control valve group includes a first on-off valve, a second on-off valve, a third electronic expansion valve, and a fourth electronic expansion valve. The first on-off valve is arranged in the first main circuit, the second on-off valve is arranged in the second main circuit, the third electronic expansion valve is arranged in the first branch circuit, and the fourth electronic expansion valve is arranged in the second branch circuit.

In some examples, the plurality of interfaces further include a first one-way valve interface and a second one-way valve interface. The integrated module further includes a first one-way valve and a second one-way valve. The first one - way valve is fixed to the valve seat and is connected to the first one-way valve interface. The first one-way valve is respectively connected to the throttle valve group and the first heat exchanger and enables the refrigerant to unidirectional flow to the first heat exchanger. The second one-way valve is fixed to the valve seat and is connected to the second one-way valve interface. The second one-way valve is respectively connected to the throttle valve group and the external heat exchanger and enables the refrigerant to unidirectional flow to the throttle valve group.

In some examples, the thermal management system further includes a first vehicle interior heat exchanger. Two of the plurality of interfaces is correspondingly connected to the inlet and outlet ends of the first vehicle interior heat exchanger. The thermal management system also has a refrigeration mode, and in the refrigeration mode, a throttled and depressurized refrigerant flowing out of the integrated module flows to the first vehicle interior heat exchanger and then flows back to the integrated module to be discharged to the inlet.

In some examples, the thermal management system further includes a second vehicle interior heat exchanger, the second vehicle interior heat exchanger is connected to the corresponding interface and the outlet respectively; The thermal management system further has a heating mode, and in the heating mode, the refrigerant flowing out of the outlet flows to the second vehicle interior heat exchanger and then flows to the integrated module.

In some examples, the thermal management system further includes a first heat exchanger, the first heat exchanger is arranged with a first heat exchange flow path and a second heat exchange flow path for heat exchange with each other, and the first heat exchange flow path is respectively connected to the throttle valve group and the inlet; the thermal management system also includes a coolant circuit, the coolant circuit is used for heat exchange with the motor electronic control module radiator of the vehicle, and the second heat exchange flow path is configured as a portion of the coolant circuit.

In some examples, the thermal management system further includes a first radiator and a first switching valve, the first switching valve is respectively connected to the first radiator, the motor electronic control module radiator, and the first heat exchanger, and the thermal management system further has a first working mode, a second working mode, and a third working mode, and the first switching valve operates to control the thermal management system to switch between the first working mode, the second working mode, and the third working mode; in the first working mode, the coolant flows through the motor electronic control module radiator and the first radiator to form the coolant circuit; in the second working mode, the coolant flows through the motor electronic control module radiator and the second heat exchange flow path to form the coolant circuit; in the third working mode, the coolant flows through the motor electronic control module radiator, the second heat exchange flow path, and the first radiator to form the coolant circuit.

In some examples, the thermal management system further includes a hybrid mode, and the first switching valve is configured to control the thermal management system to simultaneously operate the second working mode and the third working mode to enter the hybrid mode.

In some examples, the plurality of interfaces includes a switching valve interface, and the first switching valve is fixed to the valve seat and is connected to the switching valve interface.

In some examples, the plurality of interfaces include a first water side interface and a second water side interface, the first water side interface is connected to the motor electronic control module radiator, and the second water side interface is connected to the first radiator.

In some examples, the plurality of interfaces include a first interface of the heat exchanger, a second interface of the heat exchanger, a third interface of the heat exchanger, and a fourth interface of the heat exchanger, the first heat exchanger is fixed to the valve seat, the two ends of the first heat exchange flow path are respectively connected to the first interface of the heat exchanger and the second interface of the heat exchanger, and the two ends of the second heat exchange flow path are respectively connected to the third interface of the heat exchanger and the fourth interface of the heat exchanger.

In some examples, the thermal management system further includes a makeup water tank, and the makeup water tank is connected to the coolant circuit for replenishing fluid to the coolant circuit.

In some examples, the plurality of interfaces includes a water tank interface, and the makeup water tank is arranged on the valve seat and is connected to the water tank interface.

**In** some examples, the plurality of interfaces include a water pump interface, the thermal management system further includes a water pump which is connected in series to the coolant circuit, and the water pump is fixed to the valve seat and is connected to the water pump interface.

A vehicle according to the example of the second aspect of the present disclosure includes: a battery module; a thermal management system, and the thermal management system being the thermal management system according to the aforementioned example of the first aspect of the present disclosure, and the first heat exchange plate and the second heat exchange plate respectively exchange heat with the battery module.

**In** accordance with the examples of the present disclosure, the vehicle employs the described thermal management system to decrease the frequency of maintenance and battery module replacements, and improve charging efficiency and user convenience, and facilitate a more rational vehicle layout.

**In** some examples, the first heat exchange plate and the second heat exchange plate are arranged with the opposite side walls of the battery module.

The additional aspects and advantages of the present disclosure will be partly described below, and will in part become evident from the following description, or may be understood through the practice of the present disclosure.

### BRIEF DESCRIPTION OF THE DRAWINGS

The above and/or additional aspects and advantages of the present disclosure will become apparent and readily understood from the description of the examples in conjunction with the following drawings, where:
FIG. 1 is a schematic diagram of a thermal management system according to an example of the present disclosure. The integrated module includes the components within the dashed box;
FIG. 2 is a schematic diagram of a thermal management system according to another example of the present disclosure. The integrated module includes the components within the dashed box;
FIG. 3 is a working schematic diagram of the thermal management system shown in FIG. 2. The thermal management system is in the battery cooling mode;
FIG. 4 is a working schematic diagram of the thermal management system shown in FIG. 2. The thermal management system is in the battery heating mode;
FIG. 5 is a working schematic diagram of the thermal management system shown in FIG. 2. The thermal management system is in the refrigeration mode;
FIG. 6 is a working schematic diagram of the thermal management system shown in FIG. 2. The thermal management system is in the battery cooling + refrigeration mode;
FIG. 7 is a working schematic diagram of the thermal management system shown in FIG. 2. The thermal management system is in the battery heating + refrigeration mode;
FIG. 8 is a working schematic diagram of the thermal management system shown in FIG. 2. The thermal management system is in the heating mode;
FIG. 9 is a working schematic diagram of the thermal management system shown in FIG. 2. The thermal management system is in the battery cooling + heating mode;
FIG. 10 is a working schematic diagram of the thermal management system shown in FIG.2. The thermal management system is in the battery heating + heating mode;
FIG. 11 is a working schematic diagram of the thermal management system shown in FIG.2. The thermal management system is in the refrigeration + heating mode;
FIG. 12 is a working schematic diagram of the thermal management system shown in FIG.2. The thermal management system is in the battery heating + refrigeration + heating mode;
FIG. 13 is a working schematic diagram of the thermal management system shown in FIG.2. The thermal management system is in the battery cooling + refrigeration + heating mode;
▪FIG. 14 is a schematic diagram of an integrated module according to an example of the present disclosure;
FIG. 15 is another schematic diagram of the integrated module shown in FIG. 14;
FIG. 16 is yet another schematic diagram of the integrated module shown in FIG. 14;
FIG. 17 is a schematic diagram of the gas-liquid separator shown in FIG. 14;

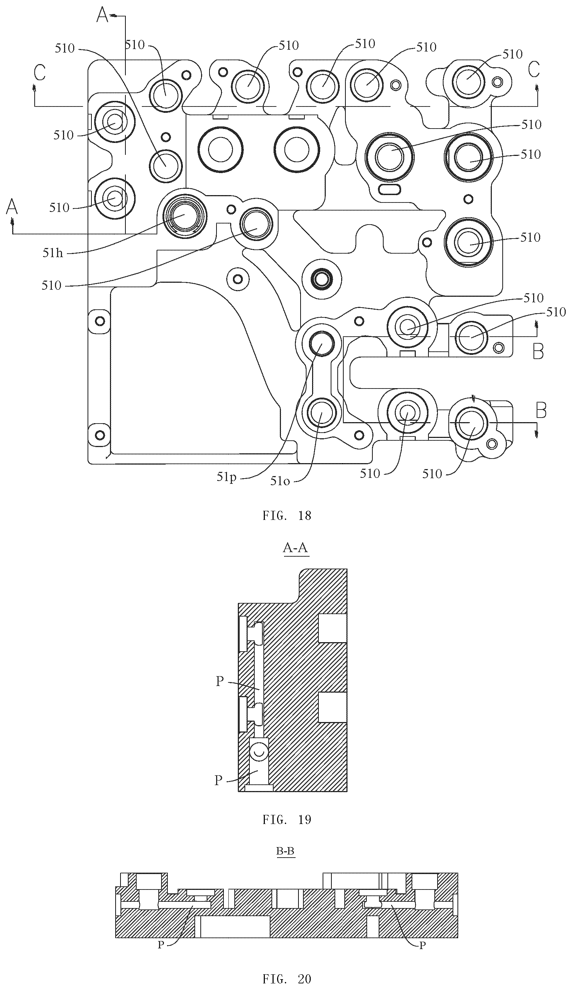

FIG. 18 is a partial schematic diagram of the valve seat shown in FIG. 14;
FIG. 19 is a sectional view along the line A-A in FIG. 18;
FIG. 20 is a sectional view along the line B-B in FIG. 18;

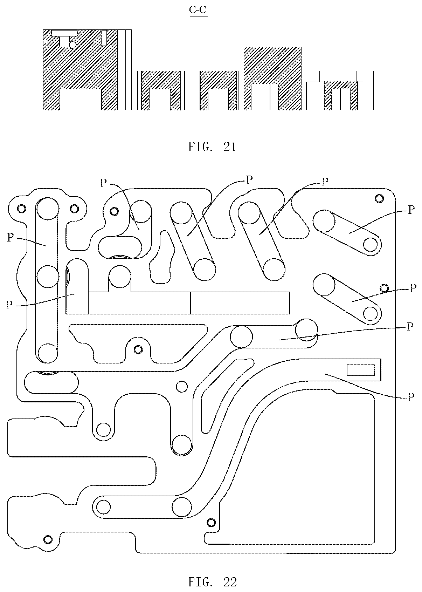

FIG. 21 is a sectional view along the line C-C in FIG. 18;
FIG. 22 is a schematic diagram of the flow channel on the refrigerant side corresponding to the valve seat shown in FIG. 18;
FIG. 23 is an exploded view of the integrated module shown in FIG. 14;
FIG. 24 is a schematic diagram of a vehicle according to an example of the present disclosure.

### Reference signs:

Thermal management system 100, motor electronic control module radiator 101, battery module 102, vehicle 200,

Compressor 1, outlet 1a, inlet 1b, external heat exchanger 2, first heat exchange plate 3, first flow channel 30, second heat exchange plate 4, second flow channel 40, integrated module 5, connecting wire 50 , flow channel P, valve seat 51, interface 510, exhaust interface 51a, heat exchanger interface 51b, return air interface 51c, first cold plate interface 51d, second cold plate interface 51e, third cold plate interface 51f, fourth cold plate interface 51g, first one-way valve interface 51h, second one-way valve interface 51i, switching valve interface 51j, first water side interface 51k, second water side interface 51l, first interface of the heat exchanger 51o, second interface of the heat exchanger 51p, third interface of the heat exchanger 51q, fourth interface of the heat exchanger 51r, water tank interface 51s, water pump interface 51t, first main circuit A, second main circuit B, first branch circuit C, second branch circuit D, throttle valve group 52, first throttle valve 521, second throttle valve 522, third throttle valve 523, control valve group 53, first electronic expansion valve 531, second electronic expansion valve 532 , first on-off valve 533, second on-off valve 534, third electronic expansion valve 535, fourth electronic expansion valve 536, third on-off valve 537, fourth on-off valve 538, first one-way valve 54, second one-way valve 55, plug cover 56, temperature sensor 57, sealing ring 58, third one-way valve 59, fourth one-way valve 511, first heat exchanger 6, first vehicle interior heat exchanger 7, second vehicle interior heat exchanger 8, coolant circuit 9, first radiator 10, first switching valve 11, makeup water tank 12, water pump 13, liquid storage tank 14, filter elements 15, gas-liquid separator 16, refrigerant inlet 16a , refrigerant outlet 16b, separator joint 161, screw 162.

### DETAILED DESCRIPTION

The examples of the present disclosure are described below in detail. Examples of the examples are shown in the accompanying drawings, and same or similar reference signs in all the accompanying drawings indicate same or similar components or components having same or similar functions. The examples described below with reference to the accompanying drawings are exemplary, are intended to explain the present disclosure and cannot be construed as a limitation on the present disclosure.

The disclosure below provides many different examples or examples to realize the different structures of the present disclosure. In order to simplify the disclosure of the present disclosure, the components and arrangements of specific examples are described below. Of course, they are merely examples and are not intended to limit the present disclosure. In addition, the present disclosure can repeat reference numbers and/or letters in different examples. This repetition is for the purpose of simplification and clarity, and does not indicate the relationship between the various examples and/or arrangements discussed in itself. In addition, the various specific processes and material examples arranged by the present disclosure, but those of ordinary skill in the art will recognize the applicability of other processes and/or the use of other materials.

Below, with reference to the accompanying drawings, the thermal management system 100 for the vehicle 200 according to the example of the first aspect of the present disclosure is described. Among them, the vehicle 200 can be a fuel vehicle, a gas vehicle, a new energy vehicle, or a rail vehicle. The new energy vehicle can be a pure electric vehicle, a hybrid vehicle, or an extended-range vehicle, etc. The vehicle 200 also includes a battery module 102, and the battery module 102 can be used to supply power to the vehicle 200. For example, the battery module 102 can serve as the operating power supply of the vehicle 200, or the battery module 102 can serve as the driving power supply of the vehicle 200 to replace or partially replace fuels such as gasoline or natural gas and provide driving power for the vehicle 200, or the battery module 102 can be used to supply power to certain components of the vehicle 200, such as a motor, etc., so that the battery module 102 can meet the power requirements for at least one of the operations of starting, navigation, and driving of the vehicle 200.

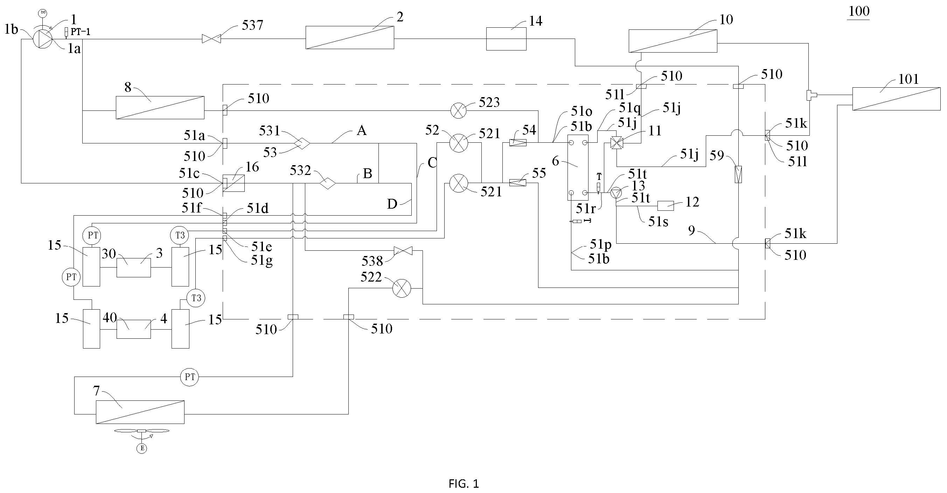

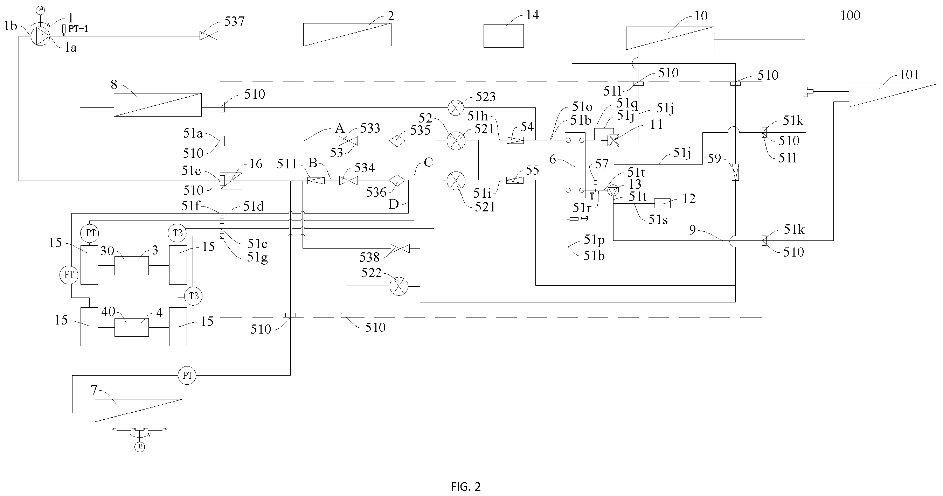

As shown in FIG. 1 and 2, the thermal management system 100 includes a compressor 1, an external heat exchanger 2, a first heat exchange plate 3, and a second heat exchange plate 4. The compressor 1 is arranged with an outlet 1a and an inlet 1b. The external heat exchanger 2 is connected to the outlet 1a. The refrigerant compressed in the compressor 1 can flow to the external heat exchanger 2, allowing the external heat exchanger 2 to exchange heat with the external environment of the vehicle 200. Eventually, the refrigerant flows back to the compressor 1 through the inlet 1b. The first heat exchange plate 3 is arranged with a first flow channel 30, in which the refrigerant is configurable to flow. The second heat exchange plate 4 is arranged with a second flow channel 40, in which the refrigerant is also configurable to flow.

The first heat exchange plate 3 and the second heat exchange plate 4 are respectively configurable for heat exchange with the battery module 102. That is, the refrigerant in the first flow channel 30 can exchange heat with the battery module 102, and the refrigerant in the second flow channel 40 can also exchange heat with the battery module 102. Evidently, the first heat exchange plate 3 and the second heat exchange plate 4 can jointly regulate the temperature of the battery module 102, so as to make the battery module 102 have an appropriate working temperature and ensure the stable and reliable operation of the battery module 102.

As shown in FIG. 1 and 2, the thermal management system 100 further includes an integrated module 5. The integrated module 5 includes a valve seat 51 and a throttle valve group 52. The throttle valve group 52 is arranged on the valve seat 51 to throttle and depressurize the refrigerant flowing through it. After throttling and depressurizing by the throttle valve group 52, the temperature and pressure of the refrigerant can be reduced, so as to enable the refrigerant to enter subsequent heat exchange components such as an evaporator to achieve evaporation and heat absorption, so as to make the corresponding heat exchange components to achieve refrigeration. The valve seat 51 is arranged with a plurality of interfaces 510. The external heat exchanger 2, the inlet 1b, the two ends of the first flow channel 30, and the two ends of the second flow channel 40 are respectively connected to the corresponding interfaces 510. The number of interfaces 510 is at least six. Six of these interfaces 510 are respectively connected to the external heat exchanger 2, the inlet 1b, the two ends of the first flow channel 30, and the two ends of the second flow channel 40, facilitating the cyclic flow of the refrigerant in the loop formed by the compressor 1, the external heat exchanger 2, the throttle valve group 52, the first heat exchange plate 3, and the second heat exchange plate 4.

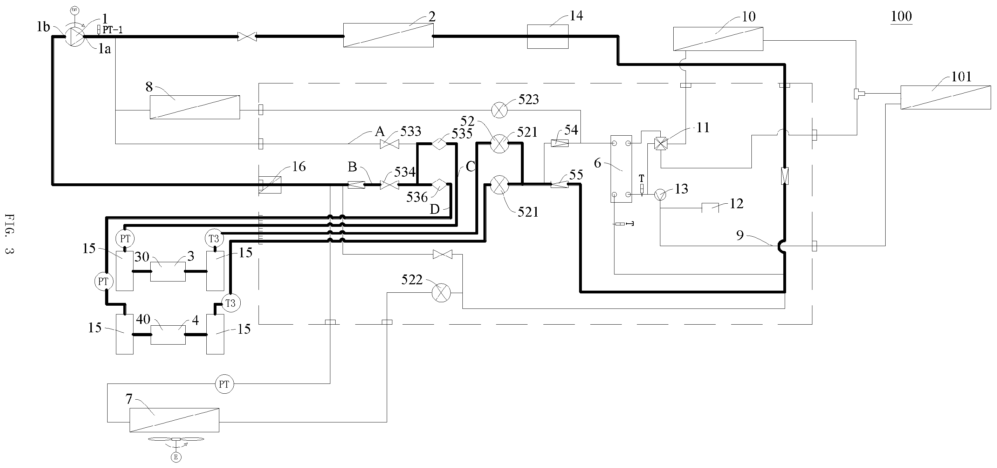

The thermal management system 100 has a battery cooling mode. As shown in FIG. 3, in the battery cooling mode, the throttled and depressurized refrigerant flowing out of the integrated module 5 flows to at least one of the first flow channel 30 and the second flow channel 40, and then flows back to the integrated module 5 to be discharged to the inlet 1b. The throttled and depressurized refrigerant has a relatively low temperature. When these refrigerants flow to at least one of the first flow channel 30 and the second flow channel 40, they can absorb the heat of the battery module 102, so as to reduce the temperature of the battery module 102, and achieve the cooling of the battery module 102, and ensure stable and reliable operation of the battery module 102.

Evidently, in the battery cooling mode, the throttled and depressurized refrigerant in the first flow channel 30 and the second flow channel 40 can flow back to the integrated module 5 through only the first flow channel 30 to be discharged to the inlet 1b, or through only the second flow channel 40 to be discharged to the inlet 1b, or be distributed to both the first flow channel 30 and the second flow channel 40 to flow back to the integrated module 5 to be discharged to the inlet 1b. In other words, the first flow channel 30 and the second flow channel 40 are arranged in parallel between the throttle valve group 52 and the inlet 1b. In the battery cooling mode, at least one of the first heat exchange plate 3 and the second heat exchange plate 4 is used for heat exchange with the battery module 102 to cool the battery module 102.

Below, taking the case where the multiple interfaces 510 include a first interface, a second interface, a third interface, a fourth interface, a fifth interface, and a sixth interface as an example for illustration:
One end of the flow channel in the external heat exchanger 2 is connected to the outlet 1a, and the other end of the flow channel in the external heat exchanger 2 is connected to the first interface. The inlet 1b is connected to the second interface. The two ends of the first flow channel 30 are respectively connected to the third interface and the fourth interface. The two ends of the second flow channel 40 are respectively connected to the fifth interface and the sixth interface. In the battery cooling mode, the high temperature and high pressure gaseous refrigerant compressed in the compressor 1 flows to the external heat exchanger 2 through the outlet 1a to exchange heat with the external environment. After heat exchange, the temperature of the refrigerant decreases and it liquefies into a medium temperature and high pressure liquid, and then flows to the integrated module 5 through the first interface. The refrigerant flows through the throttle valve group 52 in the integrated module 5 for throttling and depressurizing, further reducing the temperature of the refrigerant to form a low temperature and low pressure gas liquid mixture. The throttled and depressurized refrigerant flows out of the integrated module 5 and flows to at least one of the first flow channel 30 and the second flow channel 40 to cool the battery module 102. The refrigerant absorbs the heat of the battery module 102 and evaporates, o as to reduce the temperature of the battery module 102. Then, the refrigerant that has exchanged heat with the battery module 102 flows back to the integrated module 5 again and flows to the inlet 1b through the second interface to enter the next cycle.

Evidently, in the battery cooling mode, the external heat exchanger 2 serves as a condenser. When the throttled and depressurized refrigerant flows to the first flow channel 30, the refrigerant can flow out of the integrated module 5 from one of the third interface and the fourth interface, pass through the first flow channel 30, and then flow back to the integrated module 5 from the other of the third interface and the fourth interface. When the throttled and depressurized refrigerant flows to the second flow channel 40, the refrigerant can flow out of the integrated module 5 from one of the fifth interface and the sixth interface, pass through the second flow channel 40, and then flow back to the integrated module 5 from the other of the fifth interface and the sixth interface.

It should be noted that in the description of the present disclosure, the "first heat exchange plate 3" and "second heat exchange plate 4" should be understood in a broad sense, and can be understood to include the following multiple situations: 1. The first heat exchange plate 3 can be used to cool the battery module 102 and can also be used to heat the battery module 102. Similarly, the second heat exchange plate 4 can be used to cool the battery module 102 and can also be used to heat the battery module 102. 2. The first heat exchange plate 3 is only used to cool the battery module 102, and the second heat exchange plate 4 is only used to cool the battery module 102.

The thermal management system 100 for the vehicle 200 according to the present disclosure, through the arrangement of the compressor 1, the external heat exchanger 2, the first heat exchange plate 3, the second heat exchange plate 4, and the throttle valve group 52, enables the thermal management system 100 to have a battery cooling mode. At least one of the first heat exchange plate 3 and the second heat exchange plate 4 is used to cool and reduce the temperature of the battery module 102, so that the heat generated during the charging (such as fast charging), discharging, etc., of the battery module 102 can be dissipated in a timely manner. This helps to ensure that the battery module 102 have an appropriate working temperature and improve the charging efficiency of the battery module 102, and ensure the reliable use of the battery module 102 and its excellent cycle life, thereby improving the travel efficiency and convenience of use of the vehicle 200. In addition, by arranging the throttle valve group 52 on the valve seat 51, it is convenient to make the integrated module 5 have a certain degree of integration, which is conducive to saving the interior layout space of the vehicle, simplifying the pipeline connection of the system, facilitating the platform based layout, and reducing the flow resistance of the system, thus improving the efficiency of the system.

Moreover, in the present disclosure, the first heat exchange plate 3 and the second heat exchange plate 4 can jointly cool the battery module 102, accelerating the temperature cooling speed of the battery module 102 and enabling the timely dissipation of heat during high power charging.

It should be noted that in FIG. 3 to 13 of the present disclosure, the flow path formed by the thick line is the refrigerant circulation path in the corresponding mode.

In some examples, as shown in FIG. 1 and 2, the thermal management system 100 further includes a liquid storage tank 14. The liquid storage tank 14 is connected between the external heat exchanger 2 and the interface 510 of the valve seat 51 that is connected to the external heat exchanger 2, facilitating the adaptive adjustment of the thermal management system 100 according to different refrigerant circulation amounts required in different modes, so as to ensure the performance of the thermal management system 100.

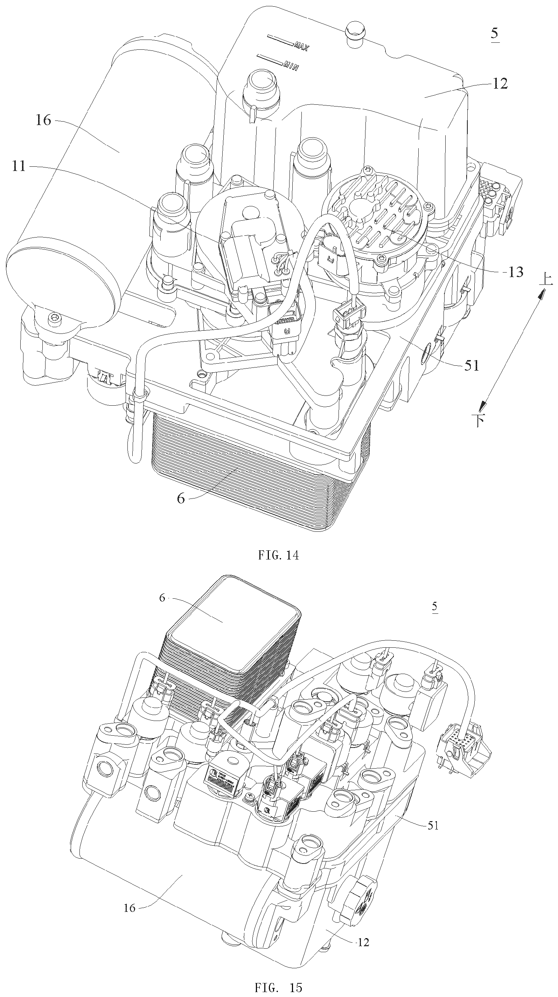

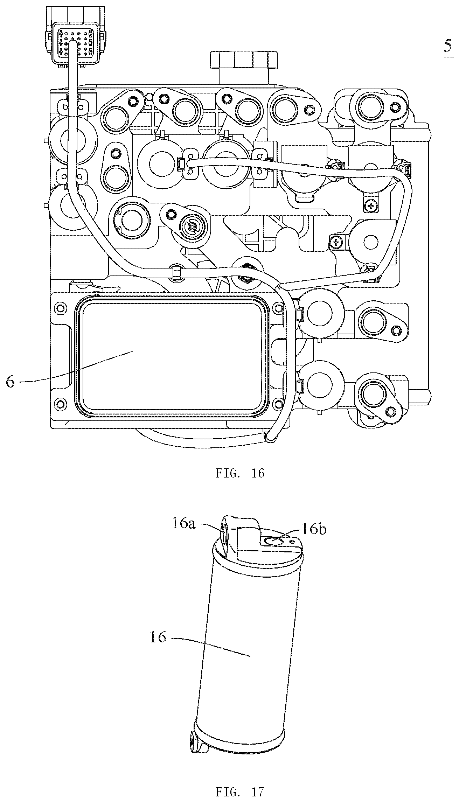

In some examples, as shown in FIG. 1, 2, 14, and 17, the multiple interfaces 510 include a separator interface. The integrated module 5 further includes a gas-liquid separator 16. The gas-liquid separator 16 has a refrigerant inlet 16a and a refrigerant outlet 16b. The gas-liquid separator 16 is fixed to the valve seat 51 (for example, the gas-liquid separator 16 is fixed to the valve seat 51 by screws 162) and is connected to the separator interface. This facilitates the arrangement of the gas-liquid separator 16, realizes the connection between the gas-liquid separator 16 and the flow channel in the valve seat 51, and improves the integration level of the integrated module 5, which is conducive to saving the interior layout space of the vehicle.

In some examples, the gas-liquid separator 16 has a separator joint 161. The separator joint 161 is arranged at the refrigerant inlet 16a and is in communication with the refrigerant inlet 16a. The refrigerant inlet 16a is connected to other flow channels or pipelines through the separator joint 161.

In some examples of the present disclosure, as shown in FIG. 1 and 2, the multiple interfaces 510 include an exhaust interface 51a. The outlet 1a is connected to the exhaust interface 51a. The refrigerant compressed in the compressor 1 can flow to the integrated module 5 through the exhaust interface 51a. The integrated module 5 is also arranged with a control valve group 53. The control valve group 53 is arranged on the valve seat 51, and the control valve group 53 operates to switch the flow direction of the refrigerant in the valve seat 51. This facilitates the enrichment of the modes and functions of the thermal management system 100.

As shown in FIG. 1, 2, and 14, the thermal management system 100 further includes a first heat exchanger 6. The first heat exchanger 6 is connected between the throttle valve group 52 and the inlet 1b. The refrigerant flowing from the throttle valve group 52 to the inlet 1b can flow through the first heat exchanger 6 for heat exchange. The thermal management system 100 has a battery heating mode. In the battery heating mode, the refrigerant discharged from the outlet 1a flows through the integrated module 5 and then flows to at least one of the first flow channel 30 and the second flow channel 40. After that, it flows to the first heat exchanger 6 after being throttled by the throttle valve group 52. The refrigerant discharged from the outlet 1a has a relatively high temperature. When these refrigerants flow to at least one of the first flow channel 30 and the second flow channel 40, they can heat the battery module 102, so as to raise the temperature of the battery module 102 and ensure the stable and reliable operation of the battery module 102. At this time, the compressor 1, the first heat exchange plate 3, the second heat exchange plate 4, the throttle valve group 52, and the first heat exchanger 6 form a refrigerant circulation loop.

Evidently, in the battery heating mode, the refrigerant discharged from the outlet 1a in the first flow channel 30 and the second flow channel 40 can flow to the throttle valve group 52 and the first heat exchanger 6 through only the first flow channel 30, or through only the second flow channel 40, or through both the first flow channel 30 and the second flow channel 40. In other words, the first flow channel 30 and the second flow channel 40 are arranged in parallel between the exhaust interface 51a and the throttle valve group 52. In the battery heating mode, at least one of the first heat exchange plate 3 and the second heat exchange plate 4 is used for heat exchange with the battery module 102 to heat the battery module 102.

Taking the case where the multiple interfaces 510 include a first interface to a sixth interface as an example, one end of the flow channel in the external heat exchanger 2 is connected to the outlet 1a, and the other end of the flow channel in the external heat exchanger 2 is connected to the first interface. The inlet 1b is connected to the second interface. The two ends of the first flow channel 30 are respectively connected to the third interface and the fourth interface. The two ends of the second flow channel 40 are respectively connected to the fifth interface and the sixth interface. In the battery heating mode, the high temperature and high pressure gaseous refrigerant compressed in the compressor 1 flows to the integrated module 5 through the outlet 1a and the exhaust interface 51a. The refrigerant flows out of the integrated module 5 and flows to at least one of the first flow channel 30 and the second flow channel 40 to heat the battery module 102. Then, the refrigerant flows back to the integrated module 5 again and is throttled and depressurized by the throttle valve group 52. After that, the refrigerant flows to the first heat exchanger 6 for heat exchange. After absorbing heat and evaporating, the refrigerant flows back to the inlet 1b to enter the next cycle.

Evidently, in the battery heating mode, the first heat exchanger 6 serves as an evaporator.

In some examples of the present disclosure, as shown in FIG. 1, 2, and 14, the multiple interfaces 510 include a heat exchanger interface 51b. The first heat exchanger 6 is fixed to the valve seat 51, and connected to the heat exchanger interface 51b. There are two heat exchanger interfaces 51b. The first heat exchanger 6 is connected between the two heat exchanger interfaces 51b. One of the heat exchanger interfaces 51b is arranged between the throttle valve group 52 and the first heat exchanger 6, and the other heat exchanger interface 51b is arranged between the first heat exchanger 6 and the interface 510 connected to the inlet 1b. This facilitates the arrangement of the first heat exchanger 6, and realizes the connection between the first heat exchanger 6 and the flow channel in the valve seat 51. The portion connected to the first heat exchanger 6 can be connected to the valve seat 51 to achieve connection with the first heat exchanger 6, and greatly simplifying the pipeline connection of the system, and reducing the flow resistance, improving the efficiency of the system, and at the same time improving the integration level of the integrated module 5, which is conducive to saving the interior layout space of the vehicle and facilitating the platform-based layout.

For example, in the examples of FIG. 1 and 2, the multiple interfaces 510 include a first interface to a sixth interface. The inlet 1b is connected to the second interface. One of the heat exchanger interfaces 51b is arranged between the throttle valve group 52 and the first heat exchanger 6, and the other heat exchanger interface 51b is arranged between the first heat exchanger 6 and the second interface. The valve seat 51 forms a flow channel for one of the heat exchanger interfaces 51b and the throttle valve group 52, and a flow channel connecting the other heat exchanger interface 51b and the second interface. Thus, in the battery heating mode, the refrigerant flows through the throttle valve group 52, then through the flow channel and out of the valve seat 51 through one of the heat exchanger interfaces 51b to the first heat exchanger 6. Then, it flows back to the flow channel of the valve seat 51 through the other heat exchanger interface 51b and out of the valve seat 51 through the second interface to flow back to the inlet 1b.

In some examples of the present disclosure, as shown in FIG.1, the multiple interfaces 510 include an exhaust interface 51a, a return gas interface 51c (such as the second interface mentioned above), a first cold plate interface 51d (such as the fourth interface mentioned above), a second cold plate interface 51e (such as the third interface mentioned above), a third cold plate interface 51f (such as the sixth interface mentioned above), and a fourth cold plate interface 51g (such as the fifth interface mentioned above). The exhaust interface 51a is connected to the outlet 1a; the return gas interface 51c is connected to the inlet 1b. The first cold plate interface 51d and the second cold plate interface 51e are respectively connected to the two ends of the first flow channel 30, and the third cold plate interface 51f and the fourth cold plate interface 51g are respectively connected to the two ends of the second flow channel 40. A first main circuit A, a second main circuit B, a first branch circuit C, and a second branch circuit D are arranged inside the valve circuit 51. The first main circuit A is connected to the exhaust interface 51a, the second main circuit B is connected to the return gas interface 51c, the first branch circuit C is connected to the first cold plate interface 51d, and the second branch circuit D is connected to the third cold plate interface 51f. The first main circuit A is connected to both the first branch circuit C and the second branch circuit D, and the second main circuit B is also connected to both the first branch circuit C and the second branch circuit D. It can be seen that the refrigerant discharged from the outlet 1a can flow to the first main circuit A through the exhaust interface 51a and can be distributed to the first branch circuit C and the second branch circuit D. The refrigerant in the first branch circuit C and the second branch circuit D converges to the second main circuit B and flows back to the compressor 1 through the return gas interface 51c.

At this time, as shown in FIG. 1, the integrated module 5 is also arranged with a control valve group 53. The control valve group 53 operates to switch the flow direction of the refrigerant in the valve seat 51. The control valve group 53 includes a first electronic expansion valve 531 and a second electronic expansion valve 532. Both the first electronic expansion valve 531 and the second electronic expansion valve 532 have the functions of on-off control and flow regulation. The first electronic expansion valve 531 is connected in series to the first main circuit A, so the first electronic expansion valve 531 can be used to control the opening and closing (i.e., non-opening) of the first main circuit A, and it can also be used to adjust the flow rate of the first main circuit A. The second electronic expansion valve 532 is connected in series to the second main circuit B, so the second electronic expansion valve 532 can be used to control the opening and closing of the second main circuit B, and it can also be used to adjust the flow rate of the second main circuit B.

Therefore, in the battery cooling mode, the first main circuit A is cut off and the second main circuit B is connected. The refrigerant discharged from the outlet 1a successively flows through the external heat exchanger 2 and the throttle valve group 52. After throttling and depressurizing, the refrigerant flows out from the integrated module 5 and flows to at least one of the first flow channel 30 and the second flow channel 40 through at least one of the second cold plate interface 51e and the fourth cold plate interface 51g to cool the battery module 102. Then, the refrigerant that has exchanged heat with the battery module 102 flows to at least one of the first branch circuit C and the second branch circuit D of the integrated module 5 through at least one of the first cold plate interface 51d and the second cold plate interface 51e again, and then flows to the return gas interface 51c through the second main circuit B and flows back to the compressor 1.

In the battery heating mode, the first main circuit A is connected and the second main circuit B is cut off. The refrigerant discharged from the outlet 1a flows to at least one of the first branch circuit C and the second branch circuit D through the first main circuit A, so that the refrigerant flows to at least one of the first flow channel 30 and the second flow channel 40. Then, the refrigerant successively flows through the throttle valve group 52 and the first heat exchanger 6, and then flows to the return gas interface 51c and to the inlet 1b. It can be seen that in the above process, the flow path at the outlet end of the first heat exchanger 6 has two branches. One branch is connected to the return gas interface 51c, and the other branch is connected to the second main circuit B. Since the second main circuit B is cut off, all the refrigerant flowing out from the first heat exchanger 6 flows to the inlet 1b through the return gas interface 51c.

Obviously, the opening and closing of the first main circuit A and the second main circuit B can be controlled by the first electronic expansion valve 531 and the second electronic expansion valve 532, which facilitates the switching of the thermal management system 100 to the battery cooling mode or the battery heating mode. This reduces the use of valve components, lowers costs, reduces the flow resistance of the system, improves the efficiency of the system, and also facilitates the control of the thermal management system 100.

It can be understood that in the example of FIG. 1, there are no valve bodies on the first branch circuit C and the second branch circuit D. In the battery cooling mode, the refrigerant after throttling and depressurizing flows from the integrated module 5 to the first flow channel 30 and the second flow channel 40 respectively. In the battery heating mode, the refrigerant discharged from the outlet 1a flows to the first flow channel 30 and the second flow channel 40 respectively through the first main circuit A. That is to say, whether in the battery cooling mode or the battery heating mode, the first branch circuit C and the second branch circuit D are both in a conducting state. Therefore, both the first heat exchange plate 3 and the second heat exchange plate 4 are used to adjust the temperature of the battery module 102.

In some other examples of the present disclosure, as shown in FIG. 2, the multiple interfaces 510 include an exhaust interface 51a, a return gas interface 51c (such as the second interface mentioned above), a first cold plate interface 51d (such as the fourth interface mentioned above), a second cold plate interface 51e (such as the third interface mentioned above), a third cold plate interface 51f (such as the sixth interface mentioned above), and a fourth cold plate interface 51g (such as the fifth interface mentioned above). The exhaust interface 51a is connected to the outlet 1a; the return gas interface 51c is connected to the inlet 1b. The first cold plate interface 51d and the second cold plate interface 51e are respectively connected to the two ends of the first flow channel 30, and the third cold plate interface 51f and the fourth cold plate interface 51g are respectively connected to the two ends of the second flow channel 40. A first main circuit A, a second main circuit B, a first branch circuit C, and a second branch circuit D are arranged inside the valve circuit 51. The first main circuit A is connected to the exhaust interface 51a, the second main circuit B is connected to the return gas interface 51c, the first branch circuit C is connected to the first cold plate interface 51d, and the second branch circuit D is connected to the third cold plate interface 51f. The first main circuit A is connected to both the first branch circuit C and the second branch circuit D, and the second main circuit B is also connected to both the first branch circuit C and the second branch circuit D. It can be seen that the refrigerant discharged from the outlet 1a can flow to the first main circuit A through the exhaust interface 51a and can be distributed to the first branch circuit C and the second branch circuit D. The refrigerant in the first branch circuit C and the second branch circuit D converges to the second main circuit B and flows back to the compressor 1 through the return gas interface 51c.

At this time, as shown in FIG. 2, the integrated module 5 is also arranged with a control valve group 53. The control valve group 53 operates to switch the flow direction of the refrigerant in the valve seat 51. The control valve group 53 includes a first on-off valve 533, a second on-off valve 534, and a third electronic expansion valve 535 and a fourth electronic expansion valve 536. The first on-off valve 533 is arranged on the first main circuit A, the second on-off valve 534 is arranged on the second main circuit B, the third electronic expansion valve 535 is arranged on the first branch circuit C, and the fourth electronic expansion valve 536 is arranged on the second branch circuit D. Then the first on-off valve 533 can be used to control the opening and closing of the first main circuit A, the second on-off valve 534 can be used to control the opening and closing of the second main circuit B, the third electronic expansion valve 535 can be used to control the flow rate of the first branch circuit C, and the fourth electronic expansion valve 536 can be used to control the flow rate of the second branch circuit D.

Therefore, in the battery cooling mode, the first main circuit A is cut off and the second main circuit B is connected. The refrigerant discharged from the outlet 1a successively flows through the external heat exchanger 2 and the throttle valve group 52. After throttling and depressurizing, the refrigerant flows out from the integrated module 5 and flows to at least one of the first flow channel 30 and the second flow channel 40 through at least one of the second cold plate interface 51e and the fourth cold plate interface 51g to cool the battery module 102. Then, the refrigerant that has exchanged heat with the battery module 102 flows to at least one of the first branch circuit C and the second branch circuit D of the integrated module 5 through at least one of the first cold plate interface 51d and the second cold plate interface 51e again, and then flows to the return gas interface 51c through the second main circuit B and flows back to the compressor 1.

In the battery heating mode, the first main circuit A is connected and the second main circuit B is cut off. The refrigerant discharged from the outlet 1a flows to at least one of the first branch circuit C and the second branch circuit D through the first main circuit A, so that the refrigerant flows to at least one of the first flow channel 30 and the second flow channel 40. Then, the refrigerant successively flows through the throttle valve group 52 and the first heat exchanger 6, and then flows to the return gas interface 51c and to the inlet 1b. It can be seen that in the above process, the flow path at the outlet end of the first heat exchanger 6 has two branches. One branch is connected to the return gas interface 51c, and the other branch is connected to the second main circuit B. Since the second main circuit B is cut off, all the refrigerant flowing out from the first heat exchanger 6 flows to the inlet 1b through the return gas interface 51c.

Obviously, the opening and closing of the first main circuit A and the second main circuit B can be controlled by the first on-off valve 533 and the second on-off valve 534, which facilitates the switching of the thermal management system 100 to the battery cooling mode or the battery heating mode, and also facilitates the control of the thermal management system 100. Among them, the third electronic expansion valve 535 and the fourth electronic expansion valve 536 can be used to reasonably distribute the amount of refrigerant flowing to the first heat exchange plate 3 and the second heat exchange plate 4 and the degree of throttling, so as to better regulate the temperature of the battery module 102. For example, if the temperature of the battery module 102 at the position corresponding to the first heat exchange plate 3 is different from the temperature at the position corresponding to the second heat exchange plate 4, the amount of refrigerant and the refrigerant temperature of the first heat exchange plate 3 and the second heat exchange plate 4 can be adjusted respectively, which is convenient for effectively controlling the temperature of the corresponding positions of the battery module 102, thus improving the flexibility of temperature control of the battery module 102.

It can be understood that when the third electronic expansion valve 535 and the fourth electronic expansion valve 536 can be used for flow regulation but cannot achieve flow channel control, both the first branch circuit C and the second branch circuit D remain conducting. Then, whether in the battery cooling mode or the battery heating mode, both the first heat exchange plate 3 and the second heat exchange plate 4 are used to adjust the temperature of the battery module 102.

Of course, the third electronic expansion valve 535 can also have an on-off function to control the opening and closing of the first branch circuit C, and the fourth electronic expansion valve 536 can also have an on-off function to control the opening and closing of the second branch circuit D. At this time, if the first on-off valve 533 and the second on-off valve 534 cannot be closed normally, etc., the third electronic expansion valve 535 and the fourth electronic expansion valve 536 can be used in cooperation to ensure the normal use of the flow path of the thermal management system 100, which is beneficial to improving the reliability of the control valve group 53. At the same time, it can provide a certain emergency handling time for subsequent maintenance. Moreover, the third electronic expansion valve 535 and the fourth electronic expansion valve 536 can also be used to control which of the first heat exchange plate 3 and the second heat exchange plate 4 is used to adjust the temperature of the battery module 102. For example, in the battery cooling mode, if the first branch circuit C is conducting and the second branch circuit D is cut off, the first heat exchange plate 3 is used to cool the battery module 102, and the second heat exchange plate 4 cannot cool the battery module 102. Or if the first branch circuit C is cut off and the second branch circuit D is conducting, the second heat exchange plate 4 is used to cool the battery module 102, and the first heat exchange plate 3 cannot cool the battery module 102. Or if both the first branch circuit C and the second branch circuit D are conducting, both the first heat exchange plate 3 and the second heat exchange plate 4 are used to cool the battery module 102.

In some examples of the present disclosure, as shown in FIG. 1 and FIG. 2, the multiple interfaces 510 further include a first one-way valve interface 51h and a second one-way valve interface 51i. The integrated module 5 further includes a first one-way valve 54. The first one-way valve 54 is fixed to the valve seat 51 and is connected to the first one-way valve interface 51h. The first one-way valve 54 is respectively connected to the throttle valve group 52 and the first heat exchanger 6, and the first one-way valve 54 enables the refrigerant unidirectional flow to the first heat exchanger 6. Then the refrigerant of the throttle valve group 52 can flow to the first heat exchanger 6 through the first one-way valve 54, while the refrigerant of the first heat exchanger 6 cannot flow to the throttle valve group 52 through the first one-way valve 54. The integrated module 5 further includes a second one-way valve 55. The second one-way valve 55 is fixed to the valve seat 51 and is connected to the second one-way valve interface 51i. The second one-way valve 55 is respectively connected to the throttle valve group 52 and the external heat exchanger 2, and the second one-way valve 55 makes the refrigerant unidirectional flow to the throttle valve group 52. Then the refrigerant of the external heat exchanger 2 can flow to the throttle valve group 52 through the second one-way valve 55, while the refrigerant of the throttle valve group 52 cannot flow to the external heat exchanger 2 through the second one-way valve 55. Thus, the integration degree of the integrated module 5 is further improved.

It can be seen that in the battery cooling mode, the refrigerant flowing out from the outlet 1a flows through the external heat exchanger 2 and then through the second one-way valve 55 to the throttle valve group 52, so that the refrigerant throttles and depressurizes and then flows to at least one of the first heat exchange plate 3 and the second heat exchange plate 4. In the battery heating mode, the refrigerant flowing out from at least one of the first heat exchange plate 3 and the second heat exchange plate 4 flows through the throttle valve group 52 and then through the first one-way valve 54 to the first heat exchanger 6 and returns to the inlet 1b. Thus, by arranging the first one-way valve 54 and the second one-way valve 55, the refrigerant in the thermal management system 100 has an accurate flow path in the battery cooling mode and the battery heating mode, so as to ensure the temperature control effect of the battery module 102.

For example, in the examples of FIG. 1 and 2, the throttle valve group 52 includes two first throttle valves 521. One of the first throttle valves 521 corresponds to the first flow channel 30 and is connected between the first flow channel 30 and the external heat exchanger 2. The other first throttle valve 521 corresponds to the second flow channel 40 and is connected between the second flow channel 40 and the external heat exchanger 2. Thus, the flow path connecting the external heat exchanger 2 with the first heat exchange plate 3 and the second heat exchange plate 4 includes a main path and two branch paths that are respectively connected to the main path. The two branch paths are respectively connected to the first flow channel 30 and the second flow channel 40 one-to-one, and each first throttle valve 521 is connected in series to the corresponding branch path. Therefore, in the battery cooling mode, the refrigerant is throttled and depressurized by the first throttle valve 521 and flows to at least one of the first flow channel 30 and the second flow channel 40.

When the thermal management system 100 also has a battery heating mode, the refrigerant in at least one of the first flow channel 30 and the second flow channel 40 flows to the corresponding first throttle valve 521 and then to the first heat exchanger 6.

Of course, in other examples of the present disclosure, there can be only one first throttle valve 521. In this case, in the battery cooling mode, the first heat exchange plate 3 and the second heat exchange plate 4 shares the same first throttle valve 521. If the thermal management system 100 has a battery heating mode, in the battery heating mode, the first heat exchange plate 3 and the second heat exchange plate 4 also share the same first throttle valve 521.

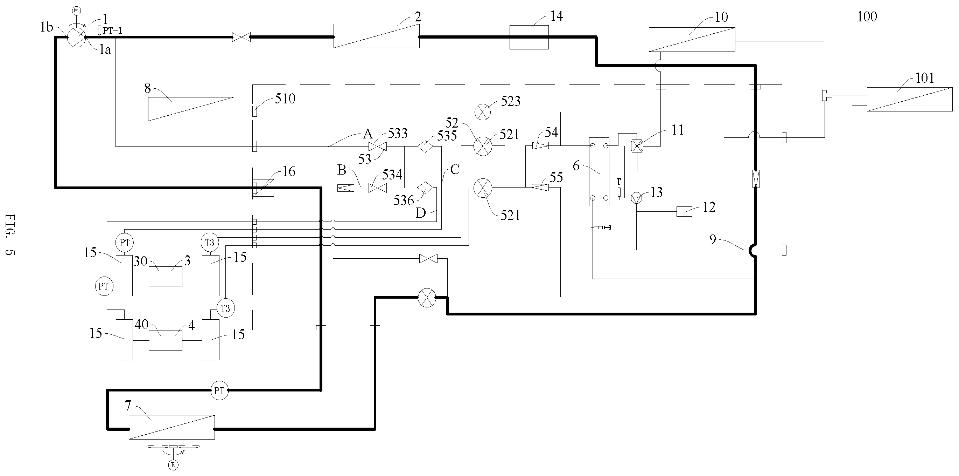

In some examples of the present disclosure, as shown in FIG. 1 and 2, the thermal management system 100 also includes a first interior heat exchanger 7. Two of the multiple interfaces 510 are respectively connected to the inlet and outlet ends of the first interior heat **exchanger** 7 to achieve the connection between the flow channels in the valve seat 51 and the first interior heat exchanger 7. The thermal management system 100 also has a refrigeration mode. As shown in FIG. 5, in the refrigeration mode, the refrigerant that has been throttled and depressurized and flows out from the integrated module 5 flows to the first interior heat exchanger 7 and then flows back to the integrated module 5 to be discharged to the inlet 1b. In the refrigeration mode, the interface 510 connected to the inlet end of the first interior heat exchanger 7 is connected to the throttle valve group 52, and the interface 510 connected to the outlet end of the first interior heat exchanger 7 is connected to the return gas interface 51c. The refrigerant after throttling and depressurization has a relatively low temperature. When these refrigerants flow to the first interior heat exchanger 7, they can absorb the heat inside the vehicle 200 to reduce the vehicle interior temperature and provide a comfortable environment for the driver and passengers. At this time, the compressor 1, the external heat exchanger 2, the throttle valve group 52, and the first interior heat exchanger 7 form a refrigerant circulation flow path.

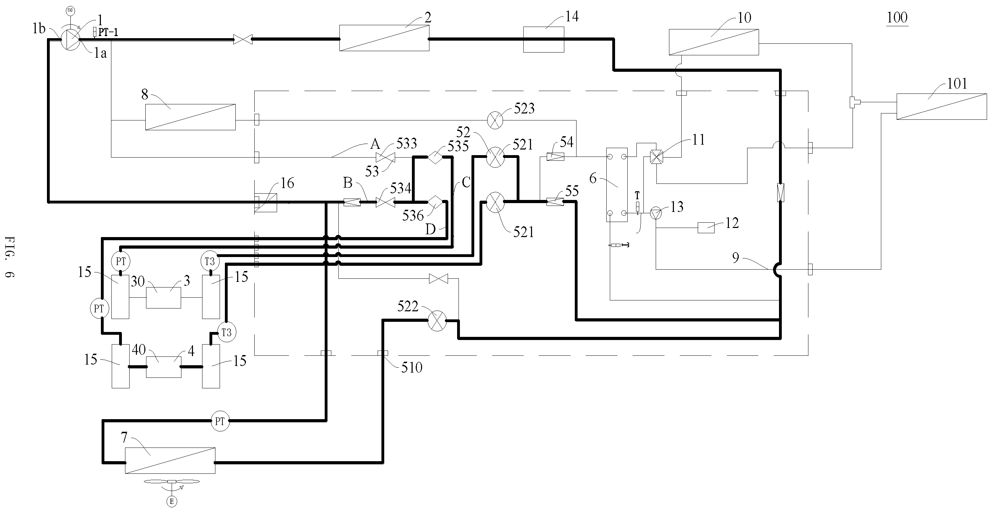

It can be seen that the first flow channel 30, the second flow channel 40, and the first interior heat exchanger 7 are connected in parallel between the throttle valve group 52 and the inlet 1b. It can be understood that the thermal management system 100 can be configured in the following ways: The thermal management system 100 has a battery cooling mode and a refrigeration mode, and the battery cooling mode and the refrigeration mode cannot be carried out simultaneously; or the thermal management system 100 has a battery cooling mode, a refrigeration mode, and a battery cooling + refrigeration mode. In the battery cooling + refrigeration mode (as shown in FIG. 6), the refrigerant that has been throttled and depressurized and flows out from the integrated module 5 is used to cool the battery module 102 and the vehicle interior. That is, part of the refrigerant that has been throttled and depressurized and flows out from the integrated module 5 flows to at least one of the first flow channel 30 and the second flow channel 40 and then flows back to the integrated module 5 to be discharged to the inlet 1b, and the other part flows to the first interior heat exchanger 7 and then flows back to the integrated module 5 to be discharged to the inlet 1b.

For example, in the examples of FIG. 1 and 2, the throttle valve group 52 includes a first throttle valve 521 and a second throttle valve 522. The first throttle valve 521 is set corresponding to the first heat exchange plate 3 and the second heat exchange plate 4, and the second throttle valve 522 is set corresponding to the first interior heat exchanger 7. It can be seen that the first interior heat exchanger 7 and the first heat exchange plate 3 and the second heat exchange plate 4 respectively correspond to different throttle valves. At this time, if both the first throttle valve 521 and the second throttle valve 522 have the on-off function, it is convenient to flexibly switch the thermal management system 100 among the battery cooling mode, the refrigeration mode, and the battery cooling + refrigeration mode without using other valves. If the first throttle valve 521 and the second throttle valve 522 have the flow regulation function, it is convenient to reasonably adjust the refrigerant for cooling the battery module 102 and the refrigerant for cooling the vehicle interior.

Of course, in other examples of the present disclosure, at least one of the first heat exchange plate 3 and the second heat exchange plate 4 shares the same throttle valve with the first interior heat exchanger 7.

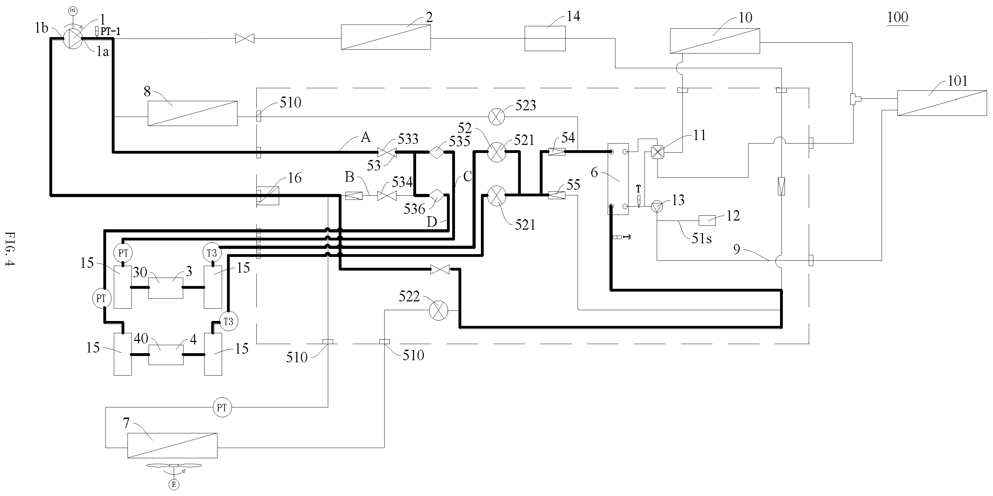

In some examples, as shown in FIG. 1 and 2, the multiple interfaces 510 include an exhaust interface 51a. The outlet 1a is connected to the exhaust interface 51a. The integrated module 5 is also arranged with a control valve group 53 located in the valve seat 51. The control valve group 53 operates to switch the flow direction of the refrigerant in the valve seat 51. The **thermal** management system 100 further includes a first heat exchanger 6 and a first interior heat exchanger 7. The first heat exchanger 6 is connected between the throttle valve group 52 and the inlet 1b. Two of the multiple interfaces 510 are respectively connected to the inlet and outlet ends of the first interior heat exchanger 7. The thermal management system 100 has a battery heating mode and a refrigeration mode. In the battery heating mode, as shown in FIG. 4, the refrigerant discharged from the outlet 1a flows through the integrated module 5, then to at least one of the first flow channel 30 and the second flow channel 40, and then to the throttle valve group 52 and the first heat exchanger 6. In the refrigeration mode, the refrigerant that has been throttled and depressurized and flows out from the integrated module 5 flows to the first interior heat exchanger 7 and then back to the integrated module 5 to be discharged to the inlet 1b.

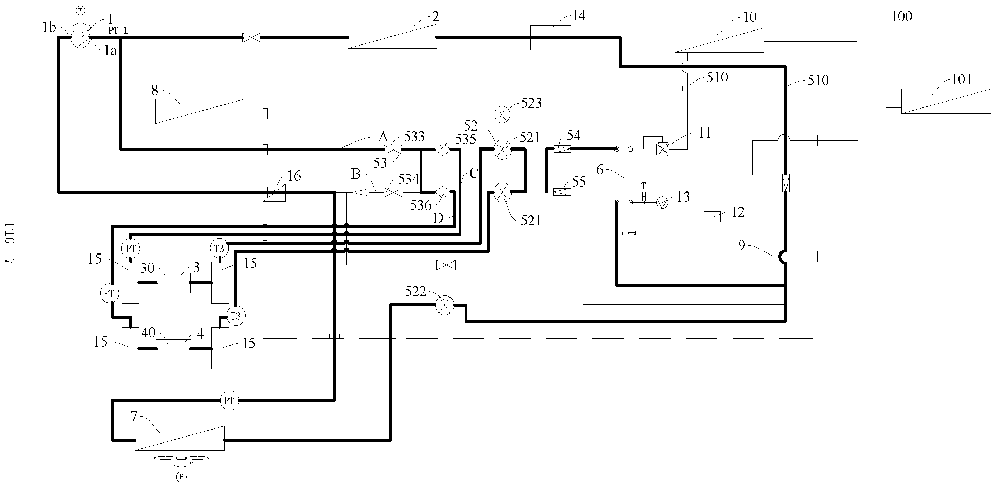

It can be understood that the thermal management system 100 can be configured in two ways. One is that the thermal management system 100 has a battery heating mode and a refrigeration mode, and these two modes cannot be operated simultaneously. The other is that the thermal management system 100 has a battery heating mode, a refrigeration mode, and a battery heating + refrigeration mode. In the battery heating + refrigeration mode (as shown in FIG. 7), part of the refrigerant discharged from the outlet 1a flows through the integrated module 5, then to at least one of the first flow channel 30 and the second flow channel 40, then to the throttle valve group 52 and the first heat exchanger 6, and then can flow back to the integrated module 5 to be discharged to the inlet 1b. Another part of the refrigerant flows through the external heat exchanger 2, passes through the throttle valve group 52, flows to the first interior heat exchanger 7, and then back to the integrated module 5 to be discharged to the inlet 1b. It can be seen that in the battery heating + refrigeration mode, the throttle valve group 52 includes multiple throttle valves, and the throttle valve through which the refrigerant in at least one of the first flow channel 30 and the second flow channel 40 flows to the throttle valve group 52 is not the same as the throttle valve through which the refrigerant from the external heat exchanger 2 flows to the throttle valve group 52.

For example, in the examples of FIG. 1 and 2, the throttle valve group 52 includes a first throttle valve 521 and a second throttle valve 522. The first throttle valve 521 is set corresponding to the first heat exchange plate 3 and the second heat exchange plate 4, and the second throttle valve 522 is set corresponding to the first interior heat exchanger 7. In the battery heating + refrigeration mode, the refrigerant in at least one of the first flow channel 30 and the second flow channel 40 flows to the first throttle valve 521, and the refrigerant from the external heat exchanger 2 flows to the second throttle valve 522.

Furthermore, in the examples of FIG. 1 and 2, in the battery heating + refrigeration mode, the refrigerant in at least one of the first flow channel 30 and the second flow channel 40 flows through the first throttle valve 521 and the first heat exchanger 6, then can flow back to the integrated module 5. After that, it goes through secondary throttling by the second throttle valve 522, passes through the first interior heat exchanger 7, and then flows back to the integrated module 5 to be discharged to the inlet 1b to ensure the refrigeration effect. Of course, in other examples of the present disclosure, in the battery heating+ refrigeration mode, the refrigerant in at least one of the first flow channel 30 and the second flow channel 40 flows through the first throttle valve 521 and the first heat exchanger 6, then can flow back to the integrated module 5, and instead of passing through the second throttle valve 522, it is discharged to the inlet 1b through other flow channels of the integrated module 5.

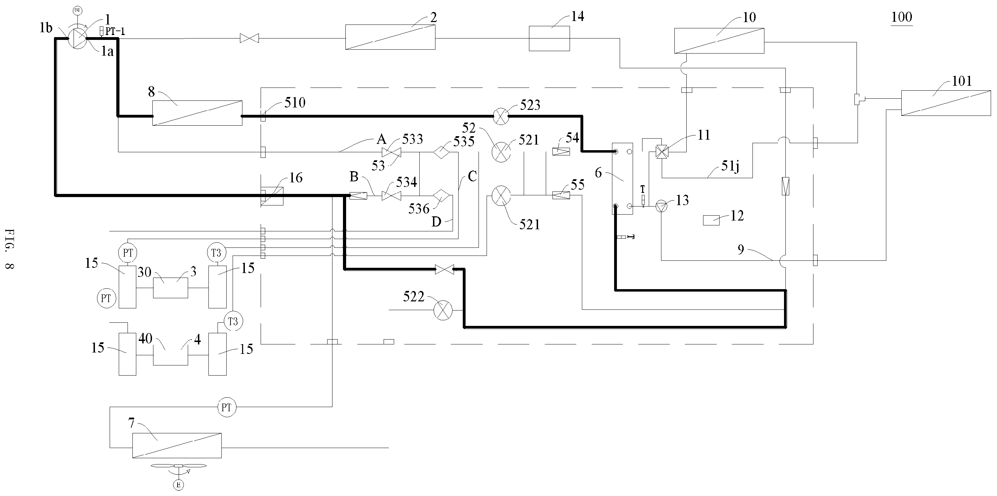

In some examples of the present disclosure, as shown in FIG. 1 and 2, the thermal management system 100 also includes a second interior heat exchanger 8. The second interior heat exchanger 8 is respectively connected to the corresponding interface 510 and the outlet 1a. The corresponding interface 510 is connected to the outlet end of the second interior heat exchanger 8 to achieve the connection between the flow channels in the valve seat 51 and the second interior heat exchanger 8. The thermal management system 100 has a heating mode. In the heating mode, as shown in FIG. 8, the refrigerant flowing out from the outlet 1a flows to the second interior heat exchanger 8 and then to the integrated module 5. The refrigerant discharged from the outlet 1a has a relatively high temperature, and when it flows through the second interior heat exchanger 8, it can be used to increase the vehicle interior temperature, providing a comfortable environment for the driver and passengers.

For example, in the examples of FIG. 1 and 2, the thermal management system 100 also includes a first heat exchanger 6. The first heat exchanger 6 is connected between the throttle valve group 52 and the inlet 1b. In the heating mode, the refrigerant flowing out from the outlet 1a flows to the second interior heat exchanger 8, then to the integrated module 5, and then through the throttle valve group 52 and the first heat exchanger 6 to be discharged to the inlet 1b. At this time, the compressor 1, the external heat exchanger 2, the throttle valve group 52, and the first heat exchanger 6 form a refrigerant circulation flow path. Of course, the refrigerant circulation flow path in the heating mode is not limited to this.

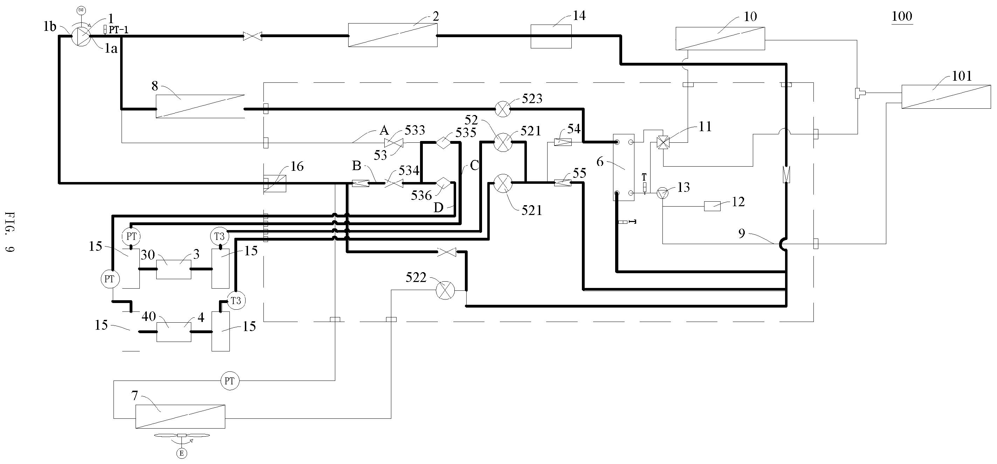

It can be understood that the thermal management system 100 can be configured that: the thermal management system 100 has a battery cooling mode and a heating mode, and these two modes cannot be carried out simultaneously, or, the thermal management system 100 has a battery cooling mode, a heating mode, and a battery cooling + heating mode. In the battery cooling + heating mode (as shown in FIG. 9), part of the refrigerant discharged from the outlet 1a flows through the external heat exchanger 2 into the integrated module 5, and after being throttled and depressurized by the throttle valve group 52, it flows to at least one of the first flow channel 30 and the second flow channel 40, and then flows back to the integrated module 5 to be discharged to the inlet 1b. Another part of the refrigerant discharged from the outlet 1a passes through the second interior heat exchanger 8, is throttled and depressurized by the throttle valve group 52, and after heat exchange through a heat exchange component such as the first heat exchanger 6, it flows to at least one of the first flow channel 30 and the second flow channel 40, and then flows back to the integrated module 5 to be discharged to the inlet 1b. It can be seen that part of the refrigerant flowing through the external heat exchanger 2 to the integrated module 5 converges with the other part of the refrigerant that has been heat exchanged by the heat exchange component, and then flows to at least one of the first flow channel 30 and the second flow channel 40.

For example, in the examples of FIG. 1 and 2, the throttle valve group 52 includes a first throttle valve 521 and a third throttle valve 523. The first throttle valve 521 is set corresponding to the first heat exchange plate 3 and the second heat exchange plate 4, and the first throttle valve 521 is connected between the heat exchange plates (the first heat exchange plate 3 and the second heat exchange plate 4) and the external heat exchanger 2. The third throttle valve 523 is set corresponding to the second interior heat exchanger 8 and the third throttle valve 523 is connected between the second interior heat exchanger 8 and the first throttle valve 521. In the battery cooling + heating mode, the other part of the refrigerant discharged from the outlet 1a passes through the second interior heat exchanger 8, then successively through the third throttle valve 523 and the first throttle valve 521, and then flows to at least one of the first flow channel 30 and the second flow channel 40 to ensure the cooling effect on the battery module 102.

Furthermore, the thermal management system 100 also includes a first heat exchanger 6. The first heat exchanger 6 is connected between the third throttle valve 523 and the first throttle valve 521 to facilitate subsequent waste heat recovery and utilization.

Of course, in other examples of the present disclosure, the throttle valve group 52 may not include the third throttle valve 523. Then, in the battery cooling + heating mode, the other part of the refrigerant discharged from the outlet 1a passes through the second interior heat exchanger 8, then through the first throttle valve 521 for throttling and depressurizing, and then flows to at least one of the first flow channel 30 and the second flow channel 40.

In some examples, as shown in FIG. 1 and 2, the multiple interfaces 510 include an exhaust interface 51a. The outlet 1a is connected to the exhaust interface 51a. The integrated module 5 is also arranged with a control valve group 53 located in the valve seat 51. The control valve group 53 operates to switch the flow direction of the refrigerant in the valve seat 51. The thermal management system 100 further includes a first heat exchanger 6 and a second interior heat exchanger 8. The first heat exchanger 6 is connected between the throttle valve group 52 and the inlet 1b. The second interior heat exchanger 8 is respectively connected to the corresponding interface 510 and the outlet 1a. The thermal management system 100 has a battery heating mode and a heating mode. In the battery heating mode, the refrigerant discharged from the outlet 1a flows through the integrated module 5, then to at least one of the first flow channel 30 and the second flow channel 40, and then to the throttle valve group 52 and the first heat exchanger 6. In the heating mode, the refrigerant flowing out from the outlet 1a flows to the second interior heat exchanger 8 and then to the integrated module 5.

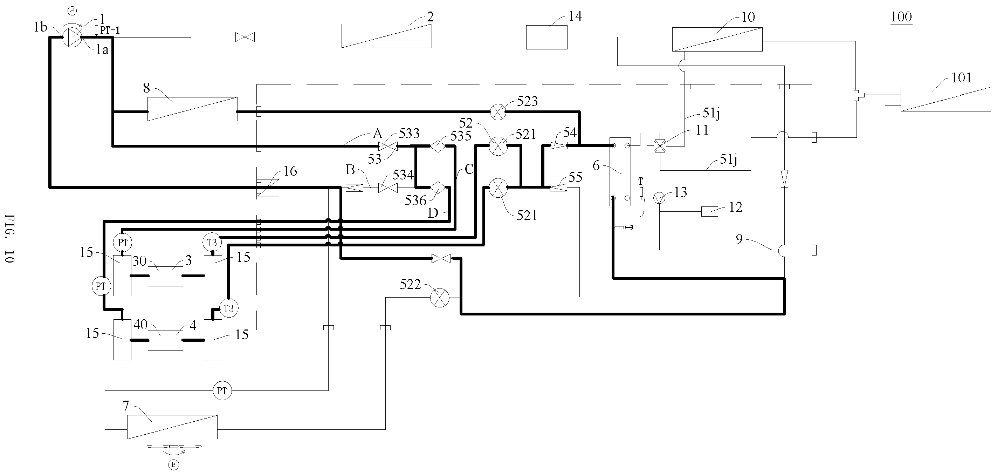

It can be understood that the thermal management system 100 can be configured that: the thermal management system 100 has a battery heating mode and a heating mode, and these two modes cannot be carried out simultaneously, or, the thermal management system 100 has a battery heating mode, a heating mode, and a battery heating + heating mode. In the battery heating + heating mode (as shown in FIG. 10), part of the refrigerant discharged from the outlet 1a flows through the integrated module 5, then to at least one of the first flow channel 30 and the second flow channel 40, then to the throttle valve group 52 and the first heat exchanger 6, and then can flow back to the integrated module 5 to be discharged to the inlet 1b. Another part of the refrigerant discharged from the outlet 1a flows through the second interior heat exchanger 8, passes through the throttle valve group 52, and then through the first heat exchanger 6 and then back to the integrated module 5 to be discharged to the inlet 1b. Among them, the aforementioned another part of the refrigerant, after passing through the throttle valve group 52 (such as the third throttle valve 523 mentioned later), can flow through the first heat exchanger 6 and then back to the integrated module 5 to be discharged to the inlet 1b.

For example, in the examples of FIG. 1 and 2, the throttle valve group 52 includes a first throttle valve 521 and a third throttle valve 523. The first throttle valve 521 is set corresponding to the first heat exchange plate 3 and the second heat exchange plate 4, and the first throttle valve 521 is connected between the heat exchange plates (the first heat exchange plate 3 and the second heat exchange plate 4) and the external heat exchanger 2. The third throttle valve 523 is set corresponding to the second interior heat exchanger 8 and the third throttle valve 523 is connected between the second interior heat exchanger 8 and the first throttle valve 521. In the battery heating + heating mode, part of the refrigerant discharged from the outlet 1a flows through the integrated module 5, then to at least one of the first flow channel 30 and the second flow channel 40, then to the first throttle valve 521 and the first heat exchanger 6, and then can flow back to the integrated module 5 to be discharged to the inlet 1b. Another part of the refrigerant discharged from the outlet 1a flows through the second interior heat exchanger 8 and passes through the third throttle valve 523 and then back to the inlet 1b.

Of course, in other examples of the present disclosure, the throttle valve group 52 may not include the third throttle valve 523. Then, in the battery heating + heating mode, the other part of the refrigerant discharged from the outlet 1a passes through the second interior heat exchanger 8, then through the first throttle valve 521 for throttling and depressurizing, and then to the first heat exchanger 6.

In some examples, as shown in FIG. 1 and 2, filter elements 15 are respectively arranged at both ends of the length of the first flow channel 30, and filter elements 15 are also respectively arranged at both ends of the length of the second flow channel 40 to ensure the smooth flow of the first flow channel 30 and the second flow channel 40.

In some examples of the present disclosure, as shown in FIG. 1 and 2, the thermal management system 100 also includes a first heat exchanger 6. The first heat exchanger 6 is arranged with a first heat exchange flow path and a second heat exchange flow path that exchange heat with each other. The first heat exchange flow path is respectively connected to the throttle valve group 52 and the inlet 1b. The refrigerant flowing from the throttle valve group 52 to the first heat exchange flow path can flow to the inlet 1b.

The thermal management system 100 also includes a coolant circuit 9. The coolant circuit 9 is used for heat exchange with the motor electronic control module radiator 101 of the vehicle 200. The motor electronic control module radiator 101 can dissipate heat from the motor electronic control module of the vehicle 200 to ensure that the motor electronic control module has a configurable operating temperature. The second heat exchange flow path is configured as part of the coolant circuit 9. Then the refrigerant in the first heat exchange flow path can exchange heat with the coolant in the second heat exchange flow path, enabling the refrigerant in the first heat exchange flow path to indirectly cool the motor electronic control radiator and further ensuring that the motor electronic control module has a configurable operating temperature.

In some examples, as shown in FIG. 1 and 2, the thermal management system 100 also includes a first radiator 10 and a first switching valve 11. The first switching valve 11 is respectively connected to the first radiator 10, the motor electronic control module radiator 101, and the first heat exchanger 6. The thermal management system 100 has a first operating mode, a second operating mode, and a third operating mode. The first switching valve 11 operates to control the thermal management system 100 to switch among the first operating mode, the second operating mode, and the third operating mode. Thus, it is convenient to control the first switching valve 11 to switch the thermal management system 100 to a configurable operating mode according to the heat dissipation requirements to meet the actual differential needs.

In the first working mode, the coolant flows through the motor electronic control radiator and the first radiator 10 to form the coolant circuit 9. At this time, the first radiator 10 can carry away the heat of the motor electronic control module radiator 101 through the coolant, reducing the temperature of the motor electronic control module radiator 101 and ensuring the cooling effect on the motor electronic control module. In the second working mode, the coolant flows through the motor electronic control module radiator 101 and the second heat exchange flow path to form the coolant circuit 9. At this moment, the coolant flows through the second heat exchange flow path to exchange heat with the refrigerant in the first heat exchange flow path (for example, the refrigerant in the first heat exchange flow path when the thermal management system 100 is in the battery heating mode), reducing the temperature of the coolant, and also ensuring the cooling effect on the motor electronic control module. In the third working mode, the coolant flows through the motor electronic control radiator, the second heat exchange flow path, and the first radiator 10 to form the coolant circuit 9. At this time, the first radiator 10 can carry away the heat of the motor electronic control module radiator 101 through the coolant, and at the same time, the coolant flows through the second heat exchange flow path to exchange heat with the refrigerant in the first heat exchange flow path (such as the refrigerant in the first heat exchange flow path when the thermal management system 100 is in the battery heating mode), reducing the temperature of the coolant, achieving double cooling of the motor electronic control module radiator 101 and enhancing the cooling effect on the motor electronic control module.

It can be seen that the first working mode can be a high temperature heat dissipation mode, the second working mode can be a heat pump working mode below - 10°C, and the third working mode can be a heat pump working mode between - 10°C and 10°C.

For example, in the examples of FIG. 1 and 2, the first switching valve 11 includes a first switching port, a second switching port, a third switching port, and a fourth switching port. The first switching port is connected to the first radiator 10, the second switching port is connected to the motor electronic control module radiator 101, the third switching port is connected to the second heat exchange flow path, the other end of the second heat exchange flow path is connected to the motor electronic control module radiator 101, and the fourth switching port is respectively connected to the other end of the second heat exchange flow path and the motor electronic control module radiator 101. In the first working mode, the first switching port and the second switching port are connected, and both the first switching port and the second switching port are isolated from the third switching port. In the second working mode, the second switching port and the third switching port are connected, and both the second switching port and the third switching port are isolated from the first switching port. In the third working mode, the third switching port and the first switching port are connected and both are isolated from the second switching port. For instance, the first switching valve 11 is a four-way valve.

In some examples of the present disclosure, as shown in FIG. 1 and 2, the thermal management system 100 also includes a hybrid mode. The first switching valve 11 is configured to control the thermal management system 100 to simultaneously operate the second working mode and the third working mode, thus entering the hybrid mode to achieve the cyclic operation of the heat absorption and heat dissipation working modes.

For example, in the examples of FIG. 1 and 2, the first switching valve 11 includes a first switching port, a second switching port, and a third switching port. The first switching port is connected to the first radiator 10, the second switching port is connected to the motor electronic control module radiator 101, and the third switching port is connected to the second heat exchange flow path, with the other end of the second heat exchange flow path connected to the motor electronic control module radiator 101. In the hybrid mode, the third switching port and the first switching port are connected and both are connected to the second switching port.

In some examples of the present disclosure, as shown in FIG. 1 and 2, the multiple interfaces 510 include a switching valve interface 51j. The first switching valve 11 is fixed to the valve seat 51, and the first switching valve 11 is connected to the switching valve interface 51j. This facilitates the arrangement of the first switching valve 11, and realizes the connection between the first switching valve 11 and the flow channels in the valve seat 51. Components connected to the first switching valve 11 can be connected to the valve seat 51 to achieve connection with the first switching valve 11. At the same time, it improves the integration level of the integrated module 5, which is beneficial for saving the vehicle interior layout space and enables platform-based layout.

In some examples, the number of switching valve interfaces 51j can be equal to the number of switching ports of the first switching valve 11.

In some examples of the present disclosure, as shown in FIG. 1 and 2, the multiple interfaces 510 include a first water side interface 51k and a second water side interface 51i. The first water side interface 51k is connected to the motor electronic control module radiator 101, and the first water side interface 51k is connected to the corresponding switching valve interface 51j through the flow channels in the valve seat 51. The second water side interface 511 is connected to the first radiator 10, and the second water side interface 511 is connected to the corresponding switching valve interface 51j through the flow channels in the valve seat 51. This makes it convenient for the assembly of the motor electronic control module radiator 101 and the first switching valve 11, as well as the assembly of the first radiator 10 and the first switching valve 11.

In some examples of the present disclosure, as shown in FIG. 1 and 2, the multiple interfaces 510 include a first interface of the heat exchanger 51o, a second interface of the heat exchanger 51p, a third interface of the heat exchanger 51q, and a fourth interface of the heat exchanger 51r. The first heat exchanger 6 is fixed to the valve seat 51. The two ends of the first heat exchange flow path are respectively connected to the first interface of the heat exchanger 51o and the second interface of the heat exchanger 51p, and the two ends of the second heat exchange flow path are respectively connected to the third interface of the heat exchanger 51q and the fourth interface of the heat exchanger 51r. Thus, it is convenient to arrange the first heat exchanger 6, and the connection between the first heat exchanger 6 and the flow channels in the valve seat 51 is realized. Components connected to the first heat exchanger 6 can be connected to the corresponding interface 510 on the valve seat 51 to achieve connection with the first heat exchange flow path and the second heat exchange flow path. At the same time, the integration degree of the integrated module 5 is improved, which is beneficial for saving the vehicle interior layout space.

It can be seen that the integrated module 5 in the present disclosure integrates the refrigerant side and the coolant side, effectively saving the vehicle interior layout space and enabling platform-based layout.

In some examples of the present disclosure, as shown in FIG. 1 and 2, the thermal management system 100 also includes a makeup water tank 12. The makeup water tank 12 is connected to the coolant circuit 9 to supply liquid to the coolant circuit 9. This is to increase the amount of coolant in the coolant circuit 9 when it lacks coolant, ensuring the cooling effect of the coolant circuit 9 on the motor electronic control module radiator 101 and facilitating the implementation of liquid deficiency protection.

It can be understood that the position of the makeup water tank 12 on the coolant circuit 9 can be specifically set according to actual needs.

In some examples of the present disclosure, as shown in FIG. 1, 2, and 14, the multiple interfaces 510 include a water tank interface 51s. The makeup water tank 12 is arranged on the valve seat 51, and the makeup water tank 12 is connected to the water tank interface 51s. Thus, it is convenient to arrange the makeup water tank 12, and the connection between the makeup water tank 12 and the flow channels in the valve seat 51 is realized. The coolant circuit 9 can be connected to the corresponding water tank interface 51s to achieve the connection between the coolant circuit 9 and the makeup water tank 12. At the same time, the integration degree of the integrated module 5 is improved.

In some examples of the present disclosure, as shown in FIG. 1, 2, and 14, the multiple interfaces 510 include a water pump interface 51t. The thermal management system 100 also includes a water pump 13 connected in series to the coolant circuit 9. The water pump 13 can drive the coolant in the coolant circuit 9 to circulate. The water pump 13 is fixed to the valve seat 51, and the water pump 13 is connected to the water pump interface 51t. Thus, it is convenient to arrange the water pump 13, and the connection between the water pump 13 and the flow channels in the valve seat 51 is realized. The coolant circuit 9 can be connected to the corresponding water pump interface 51t to achieve the connection between the coolant circuit 9 and the water pump 13. At the same time, the integration degree of the integrated module 5 is improved.

Compared with the integrated modules in existing electric vehicle technologies, the integrated module 5 of the present disclosure can flexibly integrate components and arrange flow channels. It can adapt to different installation spaces of different vehicle models with a flexible layout method. This allows for a reduction in the weight, cost, and energy consumption of the whole vehicle, while also saving layout space. Furthermore, it can accommodate the addition of new configurations. Compared with the prior art, the integrated module 5 exhibits a higher degree of integration, incorporating both refrigerant-side and water-side thermal management systems, thereby facilitating the layout of the whole vehicle pipelines. Due to the optimized space layout in the front compartment, the layout of the whole vehicle is more reasonable and aesthetically pleasing, which is more conducive to the platform-based design of the whole vehicle.

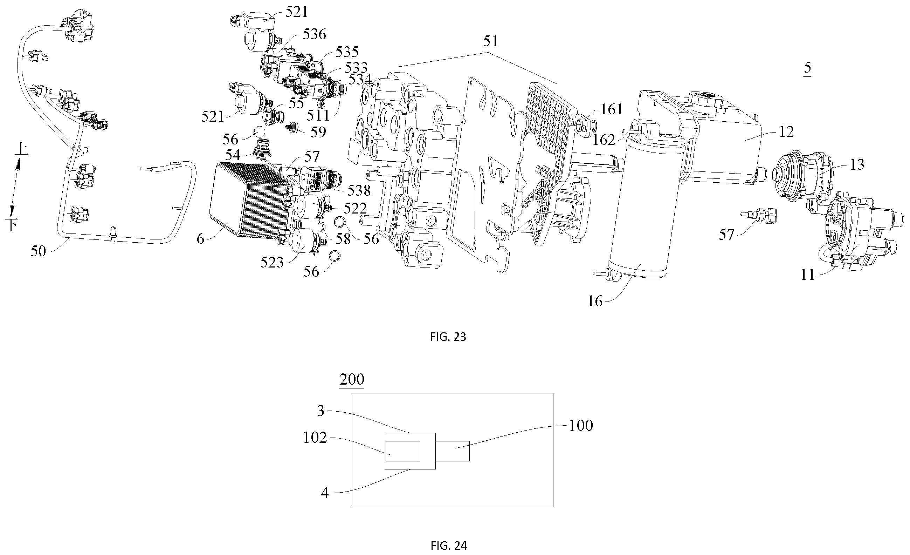

According to the second aspect example of the present disclosure, as shown in FIG. 24, the vehicle 200 includes a battery module 102 and a thermal management system 100. The thermal management system 100 corresponds to the thermal management system 100 described in the first aspect example of the present disclosure. The first heat exchange plate 3 and the second heat exchange plate 4 exchange heats with the battery module 102 respectively, to adjust its temperature and ensure that the battery module 102 operates at a configurable temperature.

For the vehicle 200 according to the example of the present disclosure, by incorporating the aforementioned thermal management system 100, the frequency of maintenance and replacement of the battery module 102 can be reduced, the charging efficiency and usability of the vehicle 200 can be improved, and the rational layout of the vehicle 200 can be facilitated.

**In** some examples of the present disclosure, the first heat exchange plate 3 and the second heat exchange plate 4 are arranged on the opposite side walls of the battery module 102 to reduce the temperature difference within the battery module 102 and improve its cycle life.

For example, the battery module 102 may include at least one row of battery packs, and each battery pack includes at least one battery cell. When a battery pack includes multiple battery cells, the cells can be arranged in sequence along the length direction of the first heat exchange plate 3. For example, each battery cell has multiple side walls, and the multiple side walls include opposite heat exchange side walls. The area of the heat exchange side walls is larger than that of the other side walls. The first heat exchange plate 3 and the second heat exchange plate 4 are in thermal conductive cooperation with the heat exchange side walls respectively, but this is not limited.

The other components and operations of the vehicle 200 according to the example of the present disclosure are known to those skilled in the art, and will not be described in detail here.

The following describes the thermal management system 100 for the vehicle 200 according to the example of the present disclosure in detail with two specific examples referring to FIG. 1 to 13. It should be understood that the following description is only exemplary and not a specific limitation of the present disclosure.

### Example 1

As shown in FIG. 2 to 13, the thermal management system 100 includes a compressor 1, an external heat exchanger 2, a first heat exchange plate 3, a second heat exchange plate 4, an integrated module 5, a first heat exchanger 6, a first interior heat exchanger 7, a second interior heat exchanger 8, a coolant circuit 9, a first radiator 10, a first switching valve 11, a makeup water tank 12, a water pump 13, a liquid storage tank 14, and a gas-liquid separator 16. The first heat exchanger 6 is a plate type heat exchanger.

The integrated module 5 includes a valve seat 51 and a throttle valve group 52, a control valve group 53, a first one-way valve 54, a second one-way valve 55, a plug cover 56, a temperature sensor 57, a sealing ring 58, a third one-way valve 59, a fourth one-way valve 511, and a connecting wire 50 arranged on the valve seat 51. The connecting wire 50 can be connected to the aforementioned valve bodies to transmit signals. A flow channel P is formed on the valve seat 51 to connect with the corresponding interface 510. Among them, the flow channels on the valve seat 51 can include those for the refrigerant to flow through and those for the coolant to flow through.

As shown in FIG. 1, a third on-off valve 537 is connected between the compressor 1 and the external heat exchanger 2. A fourth on-off valve 538 is connected between the liquid storage tank 14 and the gas-liquid separator 16. The flow path formed by the second throttle valve 522 and the first interior heat exchanger 7 is arranged in parallel with the fourth on-off valve 538. The first on-off valve 533, the second on-off valve 534, the third on-off valve 537, and the fourth on-off valve 538 can be selected as solenoid valves respectively.

The thermal management system 100 has a battery cooling mode, a battery heating mode, a refrigeration mode, a battery cooling + refrigeration mode, a battery heating + refrigeration mode, a heating mode, a battery cooling + heating mode, a battery heating + heating mode, a refrigeration + heating mode, a battery cooling + refrigeration + heating mode, and a battery heating + refrigeration + heating mode.

As shown in FIG. 3, in the battery cooling mode, the fourth on-off valve 538 and the first on-off valve 533 are closed, the third on-off valve 537 and the second on-off valve 534 are opened, the third electronic expansion valve 535 and the fourth electronic expansion valve 536 are opened to achieve the throttling effect, two first throttle valves 521 (for example, the first throttle valve 521 is a two-way throttle valve, such as a two-way electronic expansion valve, with a certain flow regulating effect) are opened, and the second throttle valve 522 and the third throttle valve 523 are both closed.

At this time, the compressor 1 discharges high temperature and high pressure gaseous refrigerant. The refrigerant passes through the third on-off valve 537 and enters the external heat exchanger 2. In the external heat exchanger 2, the refrigerant releases heat and liquefies into a medium temperature and high pressure liquid. Excess refrigerant is stored in the liquid storage tank 14, then enters the integrated module 5 through the corresponding interface 510, flows through the third one-way valve 59 and the second one-way valve 55, and enters the two first throttle valves 521 for throttling. After that, it flows out of the integrated module 5 through the corresponding interface 510 and enters the first heat exchange plate 3 and the second heat exchange plate 4. At this moment, the low temperature and low pressure gas liquid mixture absorbs the heat of the battery module 102 and evaporates, reducing the temperature of the power battery when it is too high. Then, it flows into the integrated module 5 through the corresponding interface 510, passes through the third electronic expansion valve 535 or the fourth electronic expansion valve 536 for throttling, and then successively flows through the second on-off valve 534, the fourth one-way valve 511, and the gas-liquid separator 16. Finally, it flows out of the integrated module 5 through the corresponding interface 510 and enters the inlet 1 b of the compressor 1 through the connecting pipeline for cyclic operation.

It can be seen that in the battery cooling mode, the multi-cold-plate design can improve the safety and durability of the battery module 102, accelerate the cooling rate of the battery module 102, and achieve heat exchange during high power charging.

As shown in FIG. 4, in the battery heating mode, the third on-off valve 537 and the second on-off valve 534 are closed; the fourth on-off valve 538 and the first on-off valve 533 are opened. The third electronic expansion valve 535 and the fourth electronic expansion valve 536 (for example, both the third electronic expansion valve 535 and the fourth electronic expansion valve 536 are large-caliber electronic expansion valves) are opened to achieve the throttling effect. The two first throttle valves 521 are opened, and the second throttle valve 522 and the third throttle valve 523 are both closed.

At this time, the high temperature and high pressure refrigerant flows out from the compressor 1, enters the integrated module 5 through the corresponding interface 510, and after passing through the corresponding flow channel P and the first on-off valve 533, it is distributed to the third electronic expansion valve 535 and the fourth electronic expansion valve 536. Then, it flows out of the integrated module 5 through the corresponding interface 510 and into the first heat exchange plate 3 and the second heat exchange plate 4. At this time, the refrigerant condenses and releases heat to heat the battery module 102, improving the battery life, battery efficiency, the battery capacity at low temperatures, and the overall vehicle cruising range, and effectively shortening the charging time. After releasing heat, the refrigerant enters the integrated module 5 through the corresponding interface 510, and then passes through the corresponding first throttle valve 521 for throttling and expansion and converges. The converged refrigerant enters the first heat exchanger 6 through the first one-way valve 54 to absorb heat and evaporate. The refrigerant coming out of the first heat exchanger 6 successively flows through the fourth on-off valve 538 and the gas-liquid separator 16, then flows out of the integrated module 5 through the corresponding interface 510, and enters the compressor 1 for cyclic operation.

As shown in FIG. 5, in the refrigeration mode, the first on-off valve 533, the fourth on-off valve 538, and the second on-off valve 534 are closed, and the third on-off valve 537 is opened. At this time, the compressor 1 discharges high temperature and high pressure gaseous refrigerant which enters the external heat exchanger 2. In the external heat exchanger 2, the refrigerant releases heat and liquefies into a medium temperature and high pressure liquid, and then enters the integrated module 5 through the corresponding interface 510. It successively flows through the third one-way valve 59 and the second throttle valve 522 and then flows out of the integrated module 5. The low temperature and low pressure gas liquid mixture flows to the first interior heat exchanger 7 to absorb heat and evaporate, reducing the temperature of the passenger compartment. The low temperature and low pressure gas enters the integrated module 5 again, enters the gas-liquid separator 16 through the corresponding flow channel P, and then flows out of the integrated module 5 through the corresponding interface 510 to return to the compressor 1 for cyclic operation.

As shown in FIG. 6, in the battery cooling + refrigeration mode, the fourth on-off valve 538 and the first on-off valve 533 are closed, the third on-off valve 537 and the second on-off valve 534 are opened. The third electronic expansion valve 535 and the fourth electronic expansion valve 536 are opened to achieve the throttling effect. The two first throttle valves 521 are opened, the second throttle valve 522 is opened, and the third throttle valve 523 is closed.

At this time, the compressor 1 discharges high temperature and high pressure gaseous refrigerant which enters the external heat exchanger 2. In the external heat exchanger 2, the refrigerant liquefies into a medium temperature and high pressure liquid, and excess liquid is stored in the liquid storage tank 14. The refrigerant enters the integrated module 5 through the corresponding interface 510 and passes through the third one-way valve 50 and then divides into two paths: one path, after passing through the second one-way valve 55, is distributed to the two first throttle valves 521 and flows to the first heat exchange plate 3 and the second heat exchange plate 4 respectively to reduce the temperature of the power battery when it is too high. The refrigerant then enters the integrated module 5 again through the corresponding interface 510. The refrigerant from the first heat exchange plate 3 flows through the third electronic expansion valve 535, and the refrigerant from the second heat exchange plate 4 flows through the fourth electronic expansion valve 536. The two converge and flow through the second on-off valve 534 together. The other path passes through the second throttle valve 522 and flows out of the integrated module 5 from the corresponding interface 510. The low temperature and low pressure gas liquid mixture enters the first interior heat exchanger 7 to absorb heat and evaporate, reducing the temperature of the passenger compartment. The low temperature and low pressure gas flows back into the integrated module 5 through the corresponding interface 510, converges with the refrigerant in the aforementioned path, and then enters the gas-liquid separator 16. Then, it flows out of the integrated module 5 through the corresponding interface 510 and back to the compressor 1 for cyclic operation.

As shown in FIG. 7, in the battery heating + refrigeration mode, the fourth on-off valve 538 is closed, the third on-off valve 537, the first on-off valve 533, and the second on-off valve 534 are opened. The third electronic expansion valve 535 and the fourth electronic expansion valve 536 are opened to achieve the throttling effect. The two first throttle valves 521 (for example, the first throttle valve 521 is a two-way throttle valve, such as a two-way electronic expansion valve, with a certain flow regulating effect) are opened, the second throttle valve 522 is opened, and the third throttle valve 523 is closed.

At this time, the compressor 1 discharges high temperature and high pressure gaseous refrigerant, which divides into two paths: one path, after passing through the third on-off valve 537, enters the external heat exchanger 2. In the external heat exchanger 2, the refrigerant releases heat and liquefies into a medium temperature and high pressure liquid, and excess refrigerant is stored in the liquid storage tank 14. The refrigerant enters the integrated module 5 through the corresponding interface 510 and then passes through the third one-way valve 59. The other path enters the integrated module 5 from the corresponding interface 510, is distributed to the third electronic expansion valve 535 and the fourth electronic expansion valve 536 through the corresponding flow channel P and the first on-off valve 533, and then flows to the first heat exchange plate 3 and the second heat exchange plate 4 to heat the battery module 102, and improving the battery life, and battery efficiency, and the battery capacity at low temperature, and the overall vehicle cruising range, and effectively shortening the charging time. After releasing heat, the refrigerant enters the integrated module 5 through the corresponding interface 510, passes through the corresponding first throttle valve 521, converges to the first one-way valve 54, and enters the first heat exchanger 6 to absorb heat and evaporate. Then, it converges with the refrigerant in the aforementioned path to form a gas liquid mixture, passes through the second throttle valve 522 for throttling and expansion through the corresponding flow channel P, flows out of the integrated module 5 through the corresponding interface 510. The low temperature and low pressure gas liquid mixture enters the first interior heat exchanger 7 to absorb heat and evaporate, reducing the temperature of the passenger compartment. The low temperature and low pressure gas enters the integrated module 5 through the corresponding interface 510, enters the gas-liquid separator 16 through the corresponding flow channel P, and then flows out of the integrated module 5 through the corresponding interface 510 and flows to the compressor 1 for cyclic operation.

As shown in FIG. 8, in the heating mode, the refrigerant flows out of the compressor 1 and enters the second interior heat exchanger 8. The refrigerant releases heat in the second interior heat exchanger 8 and the hot air is blown into the vehicle through the blower to heat the vehicle interior. The refrigerant coming out of the second interior heat exchanger 8 enters the integrated module 5 through the corresponding interface 510, and passes through the third throttle valve 523 for throttling and expansion. It enters the first heat exchanger 6 through the corresponding flow channel P to exchange heat with the water side and achieve heat absorption and evaporation (absorbing the waste heat of the motor electronic control module, etc.). The refrigerant coming out of the first heat exchanger 6 passes through the fourth on-off valve 538 and the gas-liquid separator 16, flows out of the integrated module 5 through the corresponding interface 510, and flows back to the compressor 1 for cyclic operation.

As shown in FIG. 9, in the battery cooling + heating mode, the fourth on-off valve 538 and the first on-off valve 533 are closed, the third on-off valve 537 and the second on-off valve 534 are opened. The third electronic expansion valve 535 and the fourth electronic expansion valve 536 are opened to achieve the throttling effect. The two first throttle valves 521 are opened, the second throttle valve 522 is closed, and the third throttle valve 523 is opened.

At this time, the compressor 1 discharges high temperature and high pressure gaseous refrigerant, which divide into two paths, one path enters the external heat exchanger 2. In the external heat exchanger 2, the refrigerant releases heat and liquefies into a medium temperature and high pressure liquid, then enters the integrated module 5 through the corresponding interface 510, and then passes through the third one-way valve 59. The other path enters the second interior heat exchanger 8. The refrigerant releases heat in the second interior heat exchanger 8, and the heat released by the second interior heat exchanger 8 is combined with that of the wind heating PTC. Then, the hot air is blown into the vehicle through the blower to heat the vehicle interior. The refrigerant coming out of the second interior heat exchanger 8 enters the integrated module 5 through the corresponding interface 510, passes through the third throttle valve 523 for throttling and expansion, and then enters the first heat exchanger 6 to absorb heat and evaporate. The refrigerant coming out of the first heat exchanger 6 converges with the refrigerant passing through the third one-way valve 59 in the aforementioned path, and then is distributed to the two first throttle valves 521 through the second one-way valve 55 and flows to the first heat exchange plate 3 and the second heat exchange plate 4 respectively. The low temperature and low pressure gas liquid mixture absorbs the heat of the battery module 102 and evaporates, reducing the temperature of the power battery when it is too high. The refrigerant in the first heat exchange plate 3 and the second heat exchange plate 4 flows back into the integrated module 5 through the corresponding interface 510, converges at the second on-off valve 534, and then flows through the fourth one-way valve 511 and the gas-liquid separator 16. Finally, it flows out of the integrated module 5 through the corresponding interface 510 and enters the compressor 1 for cyclic operation.

As shown in FIG. 10, in the battery heating + heating mode, the third on-off valve 537 and the second on-off valve 534 are closed, the fourth on-off valve 538 and the first on-off valve 533 are opened. The third electronic expansion valve 535 and the fourth electronic expansion valve 536 are opened to achieve the throttling effect. The two first throttle valves 521 are opened, the second throttle valve 522 is closed, and the third throttle valve 523 is opened.

At this time, the compressor 1 discharges high temperature and high pressure gaseous refrigerant, which divide into two paths, one path enters the second interior heat exchanger 8. The refrigerant releases heat in the second interior heat exchanger 8. The heat released by the second interior heat exchanger 8 is combined with that of the wind heating PTC, and then the hot air is blown into the vehicle through the blower to heat the vehicle interior. The refrigerant coming out of the second interior heat exchanger 8 enters the integrated module 5 through the corresponding interface 510 and passes through the third throttle valve 523 for throttling and expansion. The other path enters the integrated module 5 from the corresponding interface 510 and is distributed to the third electronic expansion valve 535 and the fourth electronic expansion valve 536 through the first on-off valve 533 to flow to the first heat exchange plate 3 and the second heat exchange plate 4 respectively to achieve battery heating, improve battery life, and battery efficiency, and battery capacity at low temperatures, and the overall vehicle cruising range, and effectively shorten the charging time. The refrigerant from the first heat exchange plate 3 and the second heat exchange plate 4, after releasing heat, enters the integrated module 5 through the corresponding interface 510, converges at the first one-way valve 54 through the corresponding first throttle valve 521. The refrigerant flowing through the first one-way valve 54 and the refrigerant flowing through the third throttle valve 523 converge and then enter the first heat exchanger 6 to absorb heat and evaporate. The refrigerant coming out of the first heat exchanger 6 flows through the fourth on-off valve 538 to the gas-liquid separator 16, and then flows out of the integrated module 5 through the corresponding interface 510 and finally enters the compressor 1 for cyclic operation.

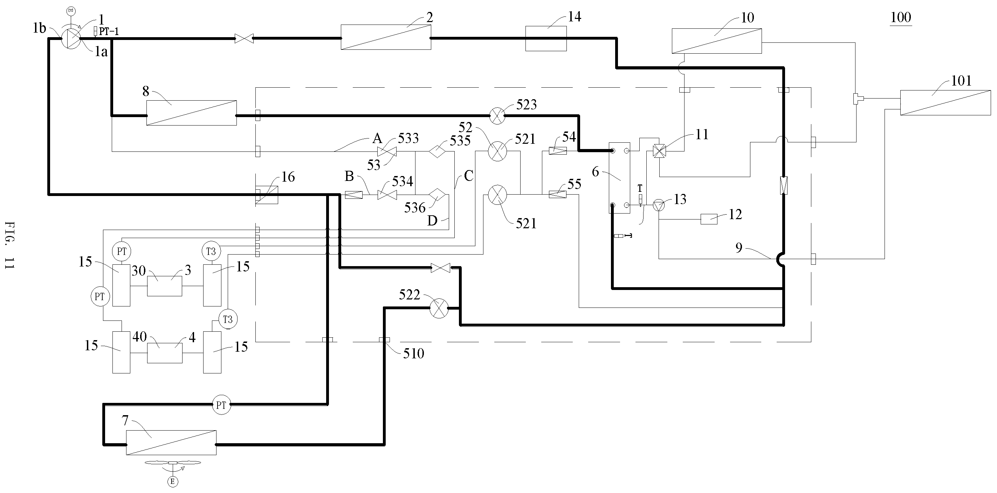

As shown in FIG. 11, in the refrigeration + heating mode, the fourth on-off valve 538 and the third on-off valve 537 are opened, and the first on-off valve 533 and the second on-off valve 534 are closed and opened.

At this time, the compressor 1 discharges high temperature and high pressure gaseous refrigerant, which divide into two paths, one path enters the external heat exchanger 2. In the external heat exchanger 2, the refrigerant releases heat and liquefies into a medium temperature and high pressure liquid, then enters the integrated module 5 through the corresponding interface 510. It enters the second throttle valve 522 through the one-way valve and the internal flow channel of the valve seat 51 for throttling and expansion. The low temperature and low pressure gas liquid mixture enters the first interior heat exchanger 7 to absorb heat and evaporate to absorb the heat in the environment, reducing the temperature of the passenger compartment. The low temperature and low pressure gaseous refrigerant enters the integrated module 5 again and enters the gas-liquid separator 16 through the flow channel in the valve seat 51. The other path enters the second interior heat exchanger 8 to release heat. The hot air is blown into the vehicle through the blower to heat the vehicle interior. The refrigerant coming out of the second interior heat exchanger 8 enters the integrated module 5 through the corresponding interface 510, passes through the flow channel in the valve seat 51, enters the third throttle valve 523 for throttling and expansion, and then enters the first heat exchanger 6 to absorb heat and evaporate. At this time, the refrigerant in the first heat exchange flow path can absorb the waste heat of the motor electronic control module by exchanging heat with the coolant in the second heat exchange flow path. The refrigerant coming out of the first heat exchanger 6 enters the fourth on-off valve through the flow channel and then enters the gas-liquid separator 16 through the flow channel. The refrigerant flows from the gas-liquid separator 16 through the corresponding interface 510 to the inlet 1b and enters the compressor 1.

It can be seen that in the refrigeration + heating mode, it can be used to achieve defogging and dehumidification in the vehicle. For example, the second interior heat exchanger 8 removes window fog and frost, and the first interior heat exchanger 7 can reduce the humidity in the vehicle.

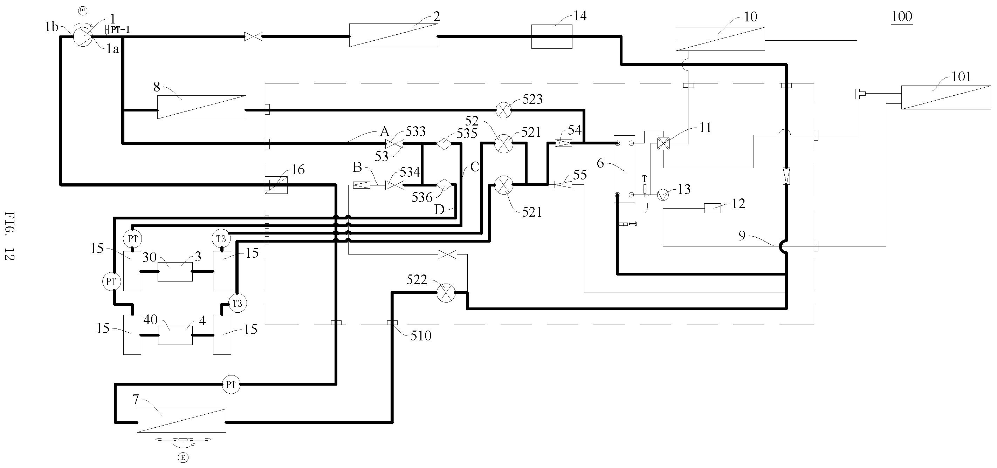

As shown in FIG. 12, in the battery heating + refrigeration + heating mode, the fourth on-off valve 538 and the second on-off valve 534 are closed, the third on-off valve 537 and the first on-off valve 533 are opened. The third electronic expansion valve 535 and the fourth electronic expansion 536 are opened to achieve the throttling effect. The two first throttle valves 521 are opened, the second throttle valve 522 is closed, and the third throttle valve 523 is opened.

At this time, the high temperature and high pressure refrigerant that flows out from the compressor 1 is divided into three paths. The first path enters the external heat exchanger 2. After the refrigerant releases heat and liquefies into a medium temperature and high pressure liquid in the external heat exchanger 2, it enters the integrated module 5 through the corresponding interface 510 and flows through the third one-way valve 59. The second path enters the second interior heat exchanger 8. The refrigerant releases heat in the second interior heat exchanger 8, and the heat released by the second interior heat exchanger 8 is combined with that of the wind heating PTC, and then the hot air is blown into the vehicle through the blower to heat the vehicle interior. The refrigerant coming out of the second interior heat exchanger 8 enters the integrated module 5 through the corresponding interface 510 and passes through the third throttle valve 523 for throttling and expansion. The third path enters the integrated module 5 through the corresponding interface 510 and is distributed to the third electronic expansion valve 535 and the fourth electronic expansion valve 536 through the first on-off valve 533 to flow to the first heat exchange plate 3 and the second heat exchange plate 4 respectively and to achieve battery heating, and improve battery life, and battery efficiency, and battery capacity at low temperatures, and the overall vehicle cruising range, and effectively shorten the charging time. The refrigerant of the first heat exchange plate 3 and the second heat exchange plate 4 flows into the integrated module 5 again through the corresponding interface 510, passes through the corresponding first throttle valve 521 for throttling and expansion, and then converge at the first one-way valve 54. The refrigerant flowing through the first one-way valve 54 and the refrigerant flowing through the third throttle valve 523 converge and then enter the first heat exchanger 6 together to absorb heat and evaporate. The refrigerant coming out of the first heat exchanger 6 converges with the refrigerant coming out of the third one-way valve 59, enters the second throttle valve 522 for throttling and expansion through the corresponding flow channel P, and then flows out of the integrated module 5 through the corresponding interface 510. The low temperature and low pressure gas liquid mixture enters the first interior heat exchanger 7 to absorb heat and evaporate, which means it absorbs the heat in the environment. The low temperature and low pressure gas flows into the integrated module 5 through the corresponding interface 510, enters the gas-liquid separator 16 through the corresponding flow channel P, and then flows out of the integrated module 5 through the corresponding interface 510 and then enters the compressor 1 for cyclic operation.

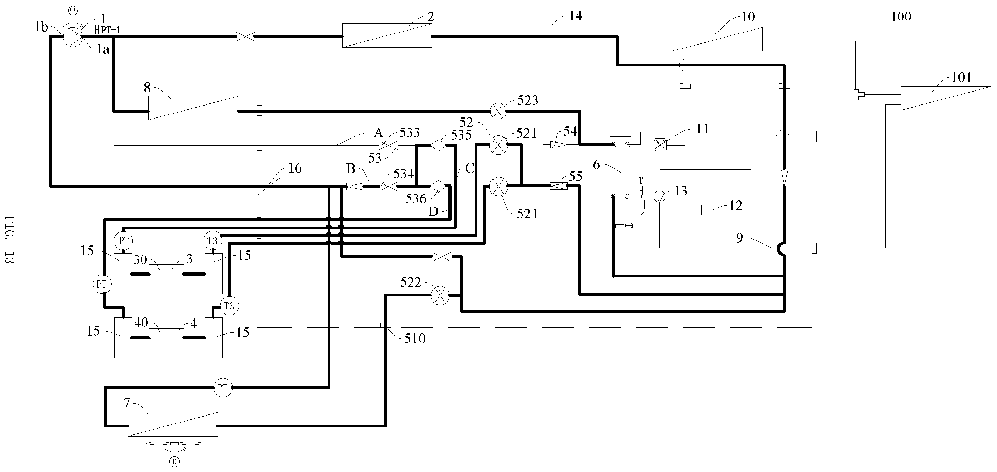

As shown in FIG. 13, in the battery cooling + refrigeration + heating mode, the fourth on-off valve 538 and the first on-off valve 533 are closed, the third on-off valve 537 and the second on-off valve 534 are opened. The third electronic expansion valve 535 and the fourth electronic expansion valve 536 are opened to achieve the throttling effect. The two first throttle valves 521 are opened, the second throttle valve 522 is closed, and the third throttle valve 523 is opened.

At this time, the compressor 1 discharges high temperature and high pressure gaseous refrigerant, which divide into two paths, the first path enters the external heat exchanger 2. After the refrigerant releases heat and liquefies into a medium temperature and high pressure liquid in the external heat exchanger 2, it enters the integrated module 5 through the corresponding interface 510 and flows into the third one-way valve 59. The second path enters the second interior heat exchanger 8. The refrigerant releases heat in the second interior heat exchanger 8. The heat released by the second interior heat exchanger 8 is combined with that of the wind heating PTC, and then the hot air is blown into the vehicle through the blower to heat the vehicle interior. The refrigerant coming out of the second interior heat exchanger 8 enters the integrated module 5 through the corresponding interface 510, enters the third throttle valve 523 for throttling and expansion through the corresponding flow channel P, and then enters the first heat exchanger 6. After that, it converges with the refrigerant flowing through the third one-way valve 59 , and then the combined refrigerant divides into two paths. The first path passes through the second throttle valve 522 for throttling and expansion and then flows out of the integrated module 5 through the corresponding interface 510. The low temperature and low pressure gas liquid mixture flows into the first interior heat exchanger 7 to absorb heat and evaporate, reducing the temperature of the passenger compartment. The low temperature and low pressure gas flows into the integrated module 5 again through the corresponding interface 510, returns to the compressor 1 through the gas-liquid separator 16. The second path is distributed to the two first throttle valves 521 through the second one-way valve 55 to flow to the first heat exchange plate 3 and the second heat exchange plate 4 respectively to absorb the heat of the battery module 102 and evaporate, reducing the temperature of the power battery when it is too high. The refrigerant of the first heat exchange plate 3 and the second heat exchange plate 4 converges at the second on-off valve 534, flows out of the integrated module 5 through the fourth one-way valve 511 and the gas-liquid separator 16, and finally enters the compressor 1 for cyclic operation.

### Example 2

As shown in FIG.1, the structure of this example is generally the same as that of Example 1, where the same components use the same reference numerals. The difference lies in the control valve group 53.

The control valve group 53 includes a first electronic expansion valve 531 and a second electronic expansion valve 532. Both the first electronic expansion valve 531 and the second electronic expansion valve 532 have on-off and flow regulation functions. The first electronic expansion valve 531 is connected in series to the first main circuit A, and the second electronic expansion valve 532 is connected in series to the second main circuit B. This thermal management system 100 also has the modes described in Example 1.

In the description of the present disclosure, it should be understood that terms such as "center", "longitudinal", "lateral", "length", "width", "thickness", "up", "down", "front", "back", "left", "right", "vertical", "horizontal", "top", "bottom", "inner", "outer", "axial", "radial", "circumferential", etc., indicate the orientation or positional relationship based on the orientation or positional relationship shown in the accompanying drawings. These are merely for the convenience of describing the present disclosure and simplifying the description, rather than indicating or implying that the device or element referred to must have a specific orientation, be constructed and operated in a specific orientation, and thus should not be construed as limiting the present disclosure. In addition, features defined as "first" and "second" may explicitly or implicitly include one or more of such features. In the description of the present disclosure, unless otherwise stated, the meaning of "a plurality of" is two or more.

In the description of the present disclosure, it should be noted that, unless otherwise clearly defined and limited, the terms "install", "connect", and "join" should be understood in a broad sense. For example, they can refer to a fixed connection, a detachable connection, or an integral connection; they can be a mechanical connection or an electrical connection; they can be a direct connection or an indirect connection through an intermediate medium, and they can be the internal communication between two components. For those of ordinary skill in the art, the specific meanings of the above terms in the present disclosure can be understood according to specific circumstances.

In the description of this specification, reference to the terms "one embodiment," "some embodiments," "illustrative embodiments," "examples," "specific examples," or "some examples" is intended to signify that specific features, structures, materials, or characteristics that is included in at least one embodiment or example of the present disclosure. **In** this specification, schematic representations of the above terms do not necessarily refer to the same embodiment or example. Furthermore, the specific features, structures, materials or characteristics described may be combined in any suitable manner in any one or more embodiments or examples.

In the present disclosure, unless otherwise clearly defined and limited, for a first feature being "above" or "below" a second feature, it can mean that the first and the second features are in direct contact, or the first and the second features are in indirect contact through an intermediate medium. Moreover, when the first feature is "above," "over," or "on top of" the second feature, it can mean that the first feature is directly above or diagonally above the second feature, or it merely indicates that the first feature is at a higher horizontal level than the second feature. When the first feature is "beneath," "below," or "under" the second feature, it can mean that the first feature is directly below or diagonally below the second feature, or it merely indicates that the first feature is at a lower horizontal level than the second feature.

Although the embodiments of the present disclosure have been shown and described, a person of ordinary skill in the art should understand that various changes, modifications, replacements and variations may be made to the embodiments without departing from the principles and purposes of the present disclosure. The scope of the disclosure is defined by the claims and their equivalents.

## Claims

1. A thermal management system (100) for a vehicle (200), the vehicle (200) comprising a battery module (102), and the thermal management system (100) comprising:
a compressor (1), the compressor (1) being arranged with an outlet (1a) and an inlet (1b);
an external heat exchanger (2), the external heat exchanger (2) being connected to the outlet (1a);
a first heat exchange plate (3) and a second heat exchange plate (4), the first heat exchange plate (3) and the second heat exchange plate (4) being respectively configurable for heat exchange with the battery module (102), a first flow channel (30) being arranged inside the first heat exchange plate (3), and a second flow channel (40) being arranged inside the second heat exchange plate (4);
an integrated module (5), the integrated module (5) comprising a valve seat (51) and a throttle valve group (52), the throttle valve group (52) being arranged on the valve seat (51) to throttle and reduce a pressure of a refrigerant flowing through it, the valve seat (51) being arranged with a plurality of interfaces (510), the external heat exchanger (2), the inlet (1b), two ends of the first flow channel (30) and two ends of the second flow channel (40) being connected to corresponding interfaces (510), respectively, the thermal management system (100) having a battery cooling mode, and in the battery cooling mode, a throttled and depressurized refrigerant which flows out of the integrated module (5) respectively flowing to at least one of the first flow channel (30) and the second flow channel (40), and then flowing back to the integrated module (5) to be discharged to the inlet (1b).

2. The thermal management system (100) for the vehicle (200) according to claim 1, wherein the plurality of interfaces (510) comprise an exhaust interface (51a), the outlet (1a) is connected to the exhaust interface (51a), the integrated module (5) is further arranged with a control valve group (53) arranged on the valve seat (51), the control valve group (53) operates to switch the flow direction of the refrigerant in the valve seat (51); the thermal management system (100) further comprises a first heat exchanger (6), the first heat exchanger (6) is connected between the throttle valve group (52) and the inlet (1b), the thermal management system (100) has a battery heating mode, and in the battery heating mode, the refrigerant flowing out of the outlet (1a) flows through the integrated module (5) and then flows to at least one of the first flow channel (30) and the second flow channel (40), and then flows to the first heat exchanger (6) after being throttled by the throttle valve group (52).

3. The thermal management system (100) for the vehicle (200) according to claim 2, wherein, the plurality of interfaces (510) comprise a heat exchanger interface (51b), and the first heat exchanger (6) is fixed to the valve seat (51) and is connected to the heat exchanger interface (51b).

4. The thermal management system (100) for the vehicle (200) according to claim 2 or 3, wherein the plurality of interfaces (510) comprise an exhaust interface (51a), a return air interface (51c), a first cold plate interface (51d) to a fourth cold plate interface (51g), the exhaust interface (51a) is connected to the outlet (1a), the return air interface (51c) is connected to the inlet (1b), the first cold plate interface (51d) and the second cold plate interface (51e) are respectively connected to the two ends of the first flow channel (30), the third cold plate interface (51f) and the fourth cold plate interface (51g) are respectively connected to the two ends of the second flow channel (40);
a first main circuit (A), a second main circuit (B), a first branch circuit (C) and a second branch circuit (D) are arranged inside the valve seat (51), the first main circuit (A) is connected to the exhaust interface (51a), the second main circuit (B) is connected to the return air interface (51c), the first branch circuit (C) is connected to the first cold plate interface (51d), the second branch circuit (D) is connected to the third cold plate interface (51f), the first main circuit (A) is respectively connected to the first branch circuit (C) and the second branch circuit (D), and the second main circuit (B) is respectively connected to the first branch circuit (C) and the second branch circuit (D);
the control valve group (53) comprises a first electronic expansion valve (531) and a second electronic expansion valve (532), both the first electronic expansion valve (531) and the second electronic expansion valve (532) have on-off and flow regulation functions, the first electronic expansion valve (531) is connected in series to the first main circuit (A), and the second electronic expansion valve (532) is connected in series to the second main circuit (B).

5. The thermal management system (100) for the vehicle (200) according to claim 2 or 3, wherein the plurality of interfaces (510) comprise an exhaust interface (51a), a return air interface (51c), a first cold plate interface (51d) to a fourth cold plate interface (51g), the exhaust interface (51a) is connected to the outlet (1a), the return air interface (51c) is connected to the inlet (1b), the first cold plate interface (51d) and the second cold plate interface (51e) are respectively connected to the two ends of the first flow channel (30), the third cold plate interface (51f) and the fourth cold plate interface (51g) are respectively connected to the two ends of the second flow channel (40);
a first main circuit (A), a second main circuit (B), a first branch circuit (C) and a second branch circuit (D) are arranged inside the valve seat (51), the first main circuit (A) is connected to the exhaust interface (51a), the second main circuit (B) is connected to the return air interface (51c), the first branch circuit (C) is connected to the first cold plate interface (51d), the second branch circuit (D) is connected to the third cold plate interface (51f), the first main circuit (A) is respectively connected to the first branch circuit (C) and the second branch circuit (D), and the second main circuit (B) is respectively connected to the first branch circuit (C) and the second branch circuit (D);
the control valve group (53) comprises a first on-off valve (533), a second on-off valve (534), a third electronic expansion valve (535) and a fourth electronic expansion valve (536), the first on-off valve (533) is arranged in the first main circuit (A), the second on-off valve (534) is arranged in the second main circuit (B), the third electronic expansion valve (535) is arranged in the first branch circuit (C), and the fourth electronic expansion valve (536) is arranged in the second branch circuit (D).

6. The thermal management system (100) for the vehicle (200) according to any one of claims 2 to 5, wherein the plurality of interfaces (510) further comprise a first one-way valve interface (51h) and a second one-way valve interface (51i), the integrated module (5) further comprises a first one-way valve (54) and a second one-way valve (55), the first one-way valve (54) is fixed to the valve seat (51) and is connected to the first one-way valve interface (51h), the first one-way valve (54) is respectively connected to the throttle valve group (52) and the first heat exchanger (6) and enables the refrigerant to unidirectional flow to the first heat exchanger (6);
the second one-way valve (55) is fixed to the valve seat (51) and is connected to the second one-way valve interface (51i), the second one-way valve (55) is respectively connected to the throttle valve group (52) and the external heat exchanger (2) and enables the refrigerant to unidirectional flow to the throttle valve group (52).

7. The thermal management system (100) for the vehicle (200) according to any one of claims 1 to 6, further comprising a first vehicle interior heat exchanger (7), two of the plurality of interfaces (510) are respectively connected to the inlet and outlet ends of the first vehicle interior heat exchanger (7);
the thermal management system (100) further has a refrigeration mode, and in the refrigeration mode, a throttled and depressurized refrigerant flowing out of the integrated module (5) flows to the first vehicle interior heat exchanger (7) and then flows back to the integrated module (5) to be discharged to the inlet (1b).

8. The thermal management system (100) for the vehicle (200) according to claim 7, further comprising a second vehicle interior heat exchanger (8), the second vehicle interior heat exchanger (8) is connected to the corresponding interface (510) and the outlet (1a) respectively;
the thermal management system (100) further has a heating mode, and in the heating mode, the refrigerant flowing out of the outlet (1a) flows to the second vehicle interior heat exchanger (8) and then flows to the integrated module (5).

9. The thermal management system (100) for the vehicle (200) according to any one of claims 1to 8, further comprising a first heat exchanger (6), the first heat exchanger (6) is arranged with a first heat exchange flow path and a second heat exchange flow path for heat exchange with each other, the first heat exchange flow path is respectively connected to the throttle valve group (52) and the inlet (1b); the thermal management system (100) further comprises a coolant circuit (9), the coolant circuit (9) is used for heat exchange with the motor electronic control module radiator (101) of the vehicle (200), and the second heat exchange flow path is configured as a portion of the coolant circuit (9).

10. The thermal management system (100) for the vehicle (200) according to claim 9, further comprising a first radiator (10) and a first switching valve (11), the first switching valve (11) is respectively connected to the first radiator (10), the motor electronic control module radiator (101) and the first heat exchanger (6), the thermal management system (100) further has a first working mode, a second working mode and a third working mode, the first switching valve (11) is operated to control the thermal management system (100) to switch between the first working mode, the second working mode and the third working mode;
in the first working mode, the coolant flows through the motor electronic control module radiator (101) and the first radiator (10) to form the coolant circuit (9);
in the second working mode, the coolant flows through the motor electronic control module radiator (101) and the second heat exchange flow path to form the coolant circuit (9);
in the third working mode, the coolant flows through the motor electronic control module radiator (101), the second heat exchange flow path and the first radiator (10) to form the coolant circuit (9).

11. The thermal management system (100) for the vehicle (200) according to claim 10, wherein the thermal management system (100) further comprises a hybrid mode, and the first switching valve (11) is configured to control the thermal management system (100) to simultaneously operate the second working mode and the third working mode to enter the hybrid mode.

12. The thermal management system (100) for the vehicle (200) according to claim 10 or 11, wherein the plurality of interfaces (510) comprise a switching valve interface (51j), and the first switching valve (11) is fixed to the valve seat (51) and is connected to the switching valve interface (51j).

13. The thermal management system (100) for the vehicle (200) according to claim 12, wherein the plurality of interfaces (510) comprise a first water side interface (51k) and a second water side interface (511), the first water side interface (51k) is connected to the motor electronic control module radiator (101), and the second water side interface (511) is connected to the first radiator (10).

14. The thermal management system (100) for the vehicle (200) according to any one of claims 9 to 13, wherein the plurality of interfaces (510) comprise a first interface of the heat exchanger (51o), a second interface of the heat exchanger (51p), a third interface of the heat exchanger (51q) and a fourth interface of the heat exchanger (51r), the first heat exchanger (6) is fixed to the valve seat (51), the two ends of the first heat exchange flow path are respectively connected to the first interface of the heat exchanger (51o) and the second interface of the heat exchanger (51p), and the two ends of the second heat exchange flow path are respectively connected to the third interface of the heat exchanger (51q) and the fourth interface of the heat exchanger (51r).

15. The thermal management system (100) for the vehicle (200) according to any one of claims 9 to 14, further comprising a makeup water tank (12), the makeup water tank (12) is connected to the coolant circuit (9) for replenishing fluid to the coolant circuit (9).

16. The thermal management system (100) for the vehicle (200) according to claim 15, wherein the plurality of interfaces (510) comprise a water tank interface (51s), the makeup water tank (12) is arranged on the valve seat (51) and is connected to the water tank interface (51s).

17. The thermal management system (100) for the vehicle (200) according to claim 16, wherein the plurality of interfaces (510) comprise a water pump interface (51t), the thermal management system (100) further comprises a water pump (13) which is connected in series to the coolant circuit (9), the water pump (13) is fixed to the valve seat (51) and is connected to the water pump interface (51t).

18. A vehicle (200), comprising:
a battery module (102);
a thermal management system (100), the thermal management system (100) being the thermal management system (100) according to any one of claims 1 to 17, and the first heat exchange plate (3) and the second heat exchange plate (4) respectively exchange heat with the battery module (102).

19. The vehicle (200) according to claim 18, wherein the first heat exchange plate (3) and the second heat exchange plate (4) are arranged in the opposite side walls of the battery module (102).
